# EUROPEAN PATENT APPLICATION

(11) **EP 2 722 763 A1**
(43) Date of publication of application: **23.04.2014**
(21) Application number: 11867788.9
(22) Date of filing: 17.06.2011
(51) Int. Cl.: G06F 12/08

(54) **ARITHMETIC PROCESSING UNIT, INFORMATION PROCESSING DEVICE, AND ARITHMETIC PROCESSING UNIT CONTROL METHOD**

(71) Applicant: Fujitsu Limited, Kawasaki-shi, Kanagawa 211-8588 (JP)
(72) Inventor: HIKICHI, Toru, Kawasaki-shi Kanagawa 211-8588 (JP)
(74) Representative: Schultes, Stephan
(86) International application number: PCT/JP2011/063985
(87) International publication number: WO 2012/172694

(57) **Abstract**

An entry information storing unit 503 of a request storing unit 0 associates, with each other, and holds, a plurality of access requests to successive areas of a DIMM 110 (main storage apparatus). A pipeline control apparatus 103 successively issues the plurality of associated access requests to the DIMM 110 or an H-CPU. The pipeline control unit 103 registers a plurality of pieces of data from the DIMM 110 or the H-CPU to the plurality of successively issued access requests in successive cache line of a storing unit 106.

## Description

### Field

The present invention relates to an processor, an information processing apparatus and a control method of an processor.

### Backgroud

A CPU (Central Processing Unit) processor has been known as having a mechanism in which a cache memory is connected to a main storage apparatus, pipeline processing of a memory access request to a cache memory and a main storage apparatus is performed. Such a processor is, specifically, for example, implemented as an L2 (Level-2: secondary) cache system in a computer system being an information processing apparatus.

When a CPU core being an instruction processing unit that processes an instruction misses a Load instruction for example and an the access to the L1 (Level-1: primary) cache memory in the CPU core is missed, a new memory access request is issued to the L2 cache control unit, and is received in a new request storing unit. The memory access request is input into the pipeline of the L2 cache memory from the new request storing unit. When the memory access request input into the pipeline meets a cache miss in the L2 cache memory, the memory access request that met a cache miss is stored in a request storing unit 1 and further in a request storing unit 2 in a main memory control unit. A memory access request is selected from the request storing unit 2 and is issued to a DRAM (Dynamic Random Access Memory) access processing unit, and also, the memory access request is released from the request storing unit 2. In the DRAM access processing unit, an access to the DRAM is performed by a pipeline process. Data response is performed from the DRAM to the L2 cache control unit via the main storage control unit. The L2 cache control unit that received the data response launches a request response pipeline. When the request response pipeline is completed without an occurrence of an abort (discontinuation) condition, update of the cache tag unit, data storage into a cache data storing unit, data response to the CPU core that issued the memory access request (in the case of a Load request and not a pre-fetch request) and the like are performed. Finally, the request storing unit 1 is released.

Meanwhile, in the pipeline control described above, when a cache hit occurs in the L2 cache memory, the memory access request is not stored in the request storing unit 1, and the a process corresponding to the processing of the request response pipeline described above is performed, data is read out from the cache data storing unit, data response is sent to the CPU core of the requesting source, and the process is completed.

There is a case in which the CPU core issues not a Load (Load:LD) request but a pre-fetch (Pre-Fetch:PF) request. The main difference between the PF request and the LD request is that while data response is necessarily performed to the requesting source for the LD request, there is a case in which data response does not need to be performed for the PF request, and the process is completed in a state in which pre-fetched data is kept in the cache (in preparation for a LD request in the future).

Furthermore, for the main storage apparatus, a burst forwarding function such as DDR3-SDRAM (Double Data Rate3 Synchronous Dynamic Random Access Memory) and the like for example is known. According to this burst forwarding function, in a case of successive accesses to adjacent COLUMNs (column: column) of the same ROW (row: line), since successive access without closing the page is possible, the forwarding throughput may be increased compared with closing the page for every one request. In such a control system, the request size for the main storage apparatus needs to be designed as equal to or above a certain size.

Meanwhile, the pipeline process in the cache control system is processed with the specific cache line size as the minimum unit.

In the cache memory, assuming that there is an optimal cache line size, when increasing the cache line size, there is no problem for a memory access process such as an access to successive address areas, but when accessing only several bytes in a cache line intermittently like a pointer access, it rather makes more waste. By contrast, when the line size is decreased more than needed, there are problems such as, in a case of performing data forwarding of the same size, the number of pipeline processes required increases, and rather compresses a bandwidth of the pipeline, or the number of entries (implementation area) of the cache tag increases, and the like. Therefore, the desired cache line size is determined in consideration of these.

Here, when the optimal main memory access size is larger than the optimal cache line size, it is impossible to bring out the best performance of the main memory with a constant access to the main storage apparatus in units of the cache line size.

With respect to this challenge, the following conventional art is known. The cache control unit performs cache fill of data obtained by a single or plurality of burst operations from the memory in the cache memory by wrap-around, based on the first information (WRPA) that indicates the burst length of the burstable memory with respect to the cache line length (cache line size). In this conventional art, data output from the memory does not need to be rearranged at a prescribed address boundary (boundary) using an aligner, and since there is no restriction to fix the top of the boundary of the data block being the target of the burst operation to the access start address, it becomes possible to, when using a memory with a shorter burst length than the cache line length, shorten the wait time of the CPU until data regarding cache miss is obtained.

Meanwhile, the following conventional art is also known. A data forwarding request with respect to the synchronized-type memory made by the data processing apparatus is divided, by the burst forwarding length unit request dividing unit, into a plurality of data forwarding requests in which data forwarding at one time is data within a single memory bank, and the data forwarding amount is the data amount for which burst forwarding is performed at one time. The divided data forwarding requests are assembled, by a request assembling unit, as a data forwarding request in which one data forwarding request with respect to each memory bank is combined, which is output as a plurality of new data forwarding request. This conventional art makes it possible for the data processing apparatus to efficiently access successive data stored in a plurality of memory banks.

However, in the conventional arts as described above, there is a problem that the increase in the efficiency of the cache control is not sufficient.

### Prior Art Document

### Patent Document

Patent Document 1: International Publication Pamphlet No. WO 01/037098
Patent Document 2: Japanese Laid-open Patent Publication No. 2006-268801.

### Disclosure of the Invention

### Problem to be Solved by the Invention

It is an objective of the present invention to improve the efficiency of the data forwarding and processing between the CPU core, the cache memory and the main storage apparatus. Means to Solve the Problem

In an example of an aspect, in a processor connected to a main storage apparatus, a cache memory comprising a plurality of cache lines respectively holding data; a request holding unit (request storing unit 0) configured to associate, with each other, and hold, a plurality of access requests to successive areas of the main storage apparatus; a control unit configured to successively issue the plurality of associated access requests to the main storage apparatus; and a processing unit configured to register a plurality of pieces of response data from the main storage apparatus to the plurality of successively issued access requests in successive cache lines of the cache memory are provided.

### Effect of the Invention

According to an aspect, the efficiency of the data forwarding and processing between the CPU core, the cache memory and the main storage apparatus may be improved.

### Brief Description of Drawings

FIG.1A is a diagram (part 1) illustrating a general configuration of an information processing apparatus having a mechanism to perform pipeline processing of a memory access request to an L2 cache memory and a main storage apparatus.
FIG.1B is a diagram (part 2) illustrating a general configuration of an information processing apparatus having a mechanism to perform pipeline processing of a memory access request to an L2 cache memory and a main storage apparatus.
FIG.2 is an operation sequence diagram illustrating a pipeline process of an L2 cache memory having the configuration in FIG.1A and FIG.1B.
FIG.3A is a diagram (part 1) illustrating a general configuration of an information processing apparatus having a CCNUMA function and having a mechanism to perform pipeline processing of a memory access request to an L2 cache memory and a main storage apparatus.
FIG.3B is a diagram (part 2) illustrating a general configuration of an information processing apparatus having a CCNUMA function and having a mechanism to perform pipeline processing of a memory access request to an L2 cache memory and a main storage apparatus.
FIG.4 is an operation sequence diagram illustrating a pipeline process of an L2 cache memory having the configuration of FIG.2A and FIG.2B.
FIG.5 is an overall configuration diagram of an embodiment.
FIG.6 is a diagram illustrating a configuration example of an entry information storing unit in a request storing unit 0.
FIG.7 is a circuit configuration diagram (part 1) of a BID entry converting circuit 506 and a BID usage status judging circuit 507.
FIG. 8 is a diagram illustrating a content example of an entry of a request storing unit 1.
FIG. 9A is an operation sequence diagram illustrating a burst access to an L-CPU in an L2 cache memory having a configuration in FIG.5 and FIG.7.
FIG. 9B is an operation sequence diagram illustrating a burst access to an H-CPU in an L2 cache memory having a configuration in FIG.5 and FIG.7.
FIG.10 is a circuit configuration diagram (part 2) of a BID entry converting circuit 506 and a BID usage status judging circuit 507.
FIG.11 is an operation sequence diagram illustrating BID control in a case in which a WEAK-PF request is overwritten with a subsequent LD request in a request storing unit 0.
FIG. 12 is a diagram illustrating a more detail configuration example of an entry information storing unit 503 of a request storing unit 0.
FIG.13A is a diagram (part 1) illustrating a specific circuit configuration example of a BID entry converting circuit 506.
FIG.13B is a diagram (part 2) illustrating a specific circuit configuration example of a BID entry converting circuit 506.
FIG.13C is a diagram (part 3) illustrating a specific circuit configuration example of a BID entry converting circuit 506.
FIG.14A is a diagram (part 1) illustrating a specific circuit configuration example of a BID usage status judging circuit 507.
FIG.14B is a diagram (part 2) illustrating a specific circuit configuration example of a BID usage status judging circuit 507.
FIG.14C is a diagram (part 3) illustrating a specific circuit configuration example of a BID usage status judging circuit 507.
FIG.14D is a diagram (part 4) illustrating a specific circuit configuration example of a BID usage status judging circuit 507.
FIG.14E is a diagram (part 5) illustrating a specific circuit configuration example of a BID usage status judging circuit 507.
FIG.14F is a diagram (part 6) illustrating a specific circuit configuration example of a BID usage status judging circuit 507.
FIG.14G is a diagram (part 7) illustrating a specific circuit configuration example of a BID usage status judging circuit 507.
FIG.14H is a diagram (part 8) illustrating a specific circuit configuration example of a BID usage status judging circuit 507.
FIG.15A is a diagram (part 1) illustrating a circuit configuration example of a BID table circuit.
FIG.15B is a diagram (part 2) illustrating a circuit configuration example of a BID table circuit.
FIG.15C is a diagram (part 3) illustrating a circuit configuration example of a BID table circuit.
FIG.15D is a diagram (part 4) illustrating a circuit configuration example of a BID table circuit.
FIG.16A is a diagram (part 1) illustrating an example of a packet format used in an embodiment.
FIG.16B is a diagram (part 2) illustrating an example of a packet format used in an embodiment.
FIG.16C is a diagram (part 3) illustrating an example of a packet format used in an embodiment.
FIG.16D is a diagram (part 4) illustrating an example of a packet format used in an embodiment.
FIG.16E is a diagram (part 5) illustrating an example of a packet format used in an embodiment.
FIG.16F is a diagram (part 6) illustrating an example of a packet format used in an embodiment.

### Description of Embodiments

Hereinafter, an embodiment to implement the present invention is explained in detail with reference to the drawings.

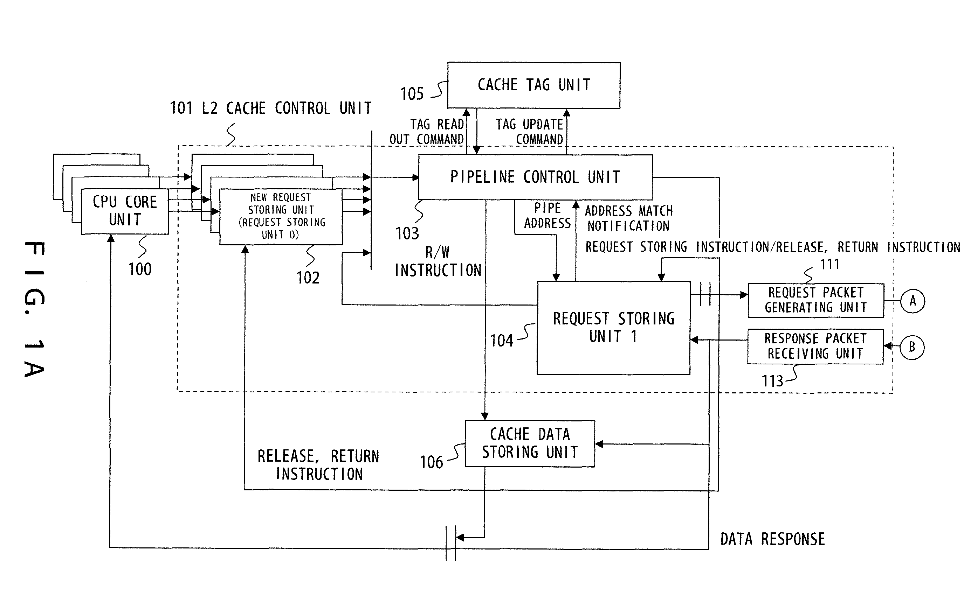

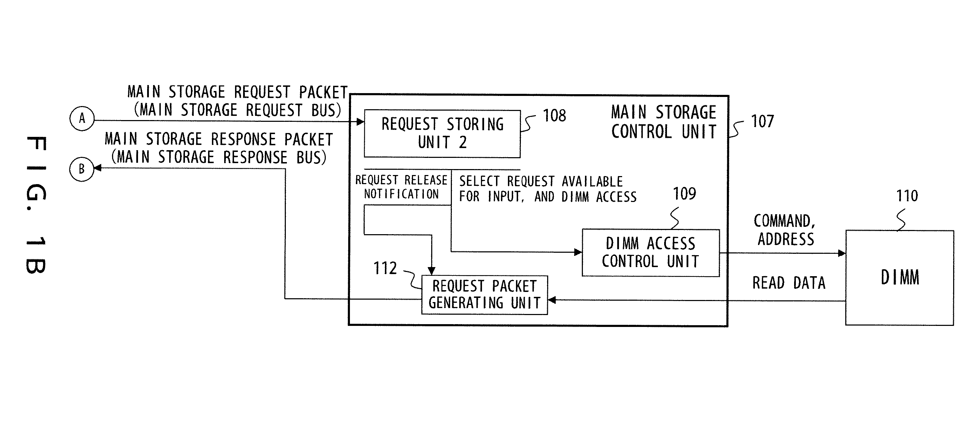

FIG.1A and FIG.1B illustrates a general configuration of an information processing apparatus having a mechanism in which an L2 cache memory is connected to a main storage apparatus, and having a mechanism to perform pipeline processing of a memory access request to the L2 cache memory and the main storage apparatus.

A CPU core unit 100 in FIG.1A is a processor that executes an arithmetic process, and one or more of it may be mounted.

A new request storing unit 102 (also referred to as a "request storing unit 0"), a pipeline control unit 103, and a request storing unit 1 104 (hereinafter, simply described as a "request storing unit 1") constitute an L2 cache control unit 101.

In new request storing unit 102, one or more entries are implemented corresponding to each CPU core unit 100. When a cache miss occurs in an L1 (primary) cache in the CPU core unit 100, the new request storing unit 102 keeps the memory access request in an entry corresponding to the CPU core unit 100, for the pipeline processing in the L2 (secondary) cache memory.

The pipeline control unit 103 executes control to perform pipeline processing of the cache access and the main memory access of the memory access request stored in the new request storing unit 102.

The cache tag unit 105 and the cache data storing unit 106 in FIG.1A constitute the L2 cache memory. The cache tag unit 105 stores a tag for each cache line. The cache data storing unit 106 keeps data of the address on a DIMM (Dual Inline Memory Module) 110 (FIG.1B) as the main storage apparatus that is determined, for each cache line, by an index corresponding to the cache line and a tag on the cache tag unit 105 corresponding to the cache line. From the pipeline control unit 103 to the cache tag unit 105, a tag read out command is issued and the tag is read out, or, a tag update command is issued and the tag is updated. Meanwhile, from the pipeline control unit 103 to the cache data storing unit 106, a read or write instruction (R/W instruction) of data is issued, and a read operation or a write operation of data is performed.

When a cache access by the pipeline control unit 103 to the cache tag unit 105 meets a cache miss, the request storing unit 1 104 (hereinafter, simply described as a "request storing unit 1") keeps the memory access request that met the cache miss. The request storing unit 1 keeps each memory access request until the access to the DIMM 110 (FIG.1B) is completed, the cache tag unit 105, the cache data storing unit 106 are updated, or data forwarding to the CPU core unit 100 is completed.

Furthermore, a main storage request packet is transmitted from a request packet generating unit 111 in FIG.1A to a request storing unit 2 108 (hereinafter, simply referred to as a "request storing control unit 2") in the main storage control unit 107 in FIG.1B via a main storage request bus. Accordingly, the memory access request that met the cache miss described above is also kept in the request storing unit 2 as well. The request storing unit 2 keeps each memory access request until the memory access request is read out by a DIMM access control unit 109 in the main storage control unit 107 and input into the main storage access pipeline.

When storing a memory access request in the request storing units 1 and 2, a request storing instruction is issued from the pipeline control unit 103 to the request storing unit 1, and a main storage request packet is issued from the request storing unit 1 to the request storing unit 2, and the request storing units 1 and 2 executes the storing operation of the memory access request based on these instructions.

The DIMM access control unit 109 in the main storage control unit 107 in FIG.1B selects a memory access request of the bank for which input from the request storing unit 2 is available, and issues a command and address of the memory access. When read out from the request storing unit 2 by the DIMM access control unit 109, a request release notification is sent from the request storing unit 2 to the request storing unit 1 in FIG.1A.

The DIMM 110 in FIG.1B is a memory module in which a plurality of DRAM chips are mounted on a printed circuit board, and is used as the main storage apparatus.

The data response from the main storage apparatus obtained by the access to the DIMM 110 is assembled into a main storage response packet by a response packet generating unit 112 in FIG.1B. The main storage response packet is received by a response packet receiving unit 113 in FIG.1A from the main storage response bus in FIG.1B. The response packet receiving unit 113 takes out response data from the main storage response packet, and passes it to the request storing unit 1, the cache data storing unit 106, the CPU core unit 100 being the requesting source of the memory access request, in FIG.1A.

Corresponding to the data response described above, the pipeline control unit 103 in FIG.1A issues a write command. Accordingly, the pipeline control unit 103 writes in the data with which response has been made from the main storage apparatus into a writable cache way in the cache line corresponding to the address of the response data mentioned above, on the cache data storing unit 106. Meanwhile, the pipeline control unit 103 issues a tag update command to the cache tag unit 105, corresponding to the data response. Accordingly, the pipeline control unit 103 updates the tag included in the cache line with a tag corresponding to the address of the response data mentioned above.

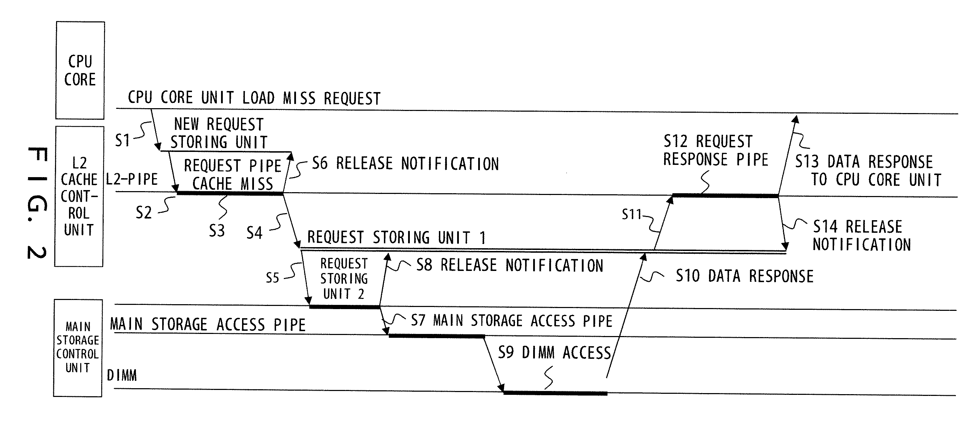

FIG.2 is an operation sequence diagram illustrating a pipeline process of an L2 cache memory having the configuration in FIG.1A and FIG.1B.

First, the CPU core unit 100 for example misses a Load instruction and the access to the L1 (primary) cache memory in the CPU core is missed, a new memory access request is issued to the L2 cache control unit 101. Accordingly, the memory access request is received by the new request storing unit 102 in the L2 cache control unit 101 (sequence S1).

The memory access request is input into the pipeline (described as "L2-PIPE" in FIG.2) of the L2 cache memory from the new request storing unit 102 (sequence S2). Meanwhile, the L2-PIPE does not represent a physical circuit but is a diagram illustrating the situation of the pipeline process along the lapse of time.

When the memory access request input into the L2-PIPE meets a cache miss in the L2 cache memory (sequence S3), the memory access request that met the cache miss is stored in the request storing unit 1 (sequence S4). Furthermore, the memory access request is transmitted from the request packet generating unit 111 in FIG.1A to the main memory request bus in FIG. 1B as a main memory request packet, and is stored in the request storing unit 2 in the main storage control unit 107 in FIG.1B (sequence S5). Meanwhile, from the pipeline control unit 103 to the new request storing unit 102, a release notification of the entry corresponding to the memory access request is sent (sequence S6). Accordingly, the new request storing unit 102 releases the entry corresponding to the memory access request, and the entry enters a state in which the next memory access request may be received.

The request storing unit 1 and the request storing unit 2 include a plurality of entries that keep the memory access request. The pipeline control unit 103 takes out one memory access request from one entry in the new request storing unit 102, and executes a cache access. As a result, a cache hit occurs and the data response to the CPU core unit 100 is completed. Alternatively, due to a cache miss, the memory access request is stored in the request storing units 1 and 2.

The memory access request stored in the request storing unit 2 in the main storage control unit 107 is input into the pipeline (described as "main storage access pipe" in FIG.2) for access of the DIMM 110 in order from the one having a processable bank address. Meanwhile, the main storage access pipe is, in the same manner as L2-PIPE, not the one representing a physical circuit but is a diagram illustrating the situation of the pipeline process along the lapse of time. The DIMM access control unit 109 takes out the memory access request from the request storing unit 2 (sequence S7), and also releases the entry of the request storing unit 2 and sends a notification of it to the request storing unit 1 (sequence S8). Accordingly, the request storing unit 2 enters a state in which a new memory access request may be received in the released entry. The DIMM access control unit 109 generates a command and an address corresponding to the taken-out memory access request, and executes the memory access to the DIMM 110 (sequence S9).

When the memory access in the DIMM 110 is completed, a data response is transmitted from the DIMM 110 to the request storing unit 1 via the response packet generating unit 112, main storage response bus, the response packet receiving unit 113 in FIG.1A (sequence S10). As a result, from the request storing unit 1, via the pipeline control unit 103, a request response pipeline (hereinafter, referred to as a "request response pipe") on L2_PIPE is started (sequence S11). When any abort (discontinuation) condition does not occur in the request response pipe, the writing of the response data into the cache data storing unit 106 and the update of the tag of the cache tag unit 105 (sequence S12). Furthermore, the pipeline control unit 103 performs data response to the CPU core unit 100 (sequence S13). Meanwhile, the data response to the CPU core unit 100 is executed when the memory access request is a Load request and is not a prefetch request. Lastly, a notification of the release of the entry of the corresponding memory access request is send to the request storing unit 1 (sequence S14). Accordingly, the corresponding entry of the request storing unit 1 is released.

In the control operation described above, the pipeline control unit 103 takes out one memory access request from a plurality of entries of the new request storing unit 102 and executes cache access, and releases the entry of the new request storing unit 102. After that, in a case such as when a cache miss occurs in one memory access request and a main storage access is needed, the pipeline control unit 103 passes the memory access request to the request storing units 1 and 2. Accordingly, the pipeline control unit 103 is able to release the process corresponding to the memory access request on the L2-PIPE first, and to read in another memory access request from a new entry of the new request storing unit 102. As a result, the DIMM access control unit 109 is able to perform pipeline processing successively of the cache access corresponding to each memory access request.

Meanwhile, after taking out one memory access request from the request storing unit 2, the DIMM access control unit 109 in the main storage control unit 107 releases the corresponding entry of the request storing unit 2, to make it enter the state in which the next memory access request may be requested. Then, the DIMM access control unit 109 is able to take out the next memory access request from the request storing unit 2 and perform processing successively, unless the bank address is the same. As described above, in the main storage control unit 107 as well, by the pipeline processing according to the main memory access pipe, an efficient main storage access is realized.

Then, in a case in which there is no vacancy in the request storing unit 1 when a memory access request is read out from the new request storing unit 102 and a cache miss occurs, the pipeline control unit 103 issues an return instruction to the new request storing unit 102. As a result, the corresponding entry of the new request storing unit 102 is not released and enters the standby state.

Meanwhile, from the pipeline control unit 103 to the request storing unit 1, a notification of the pipe address (the address to which an access is requested by the memory access requests) that is processed currently by the pipeline processing by the pipeline control unit 103. As a result, when the request storing unit 1 detects the match between the address requested by the memory access request in in the entry of itself and the pipe address, it sends an address match request to the pipeline control unit 103. In this case, when the pipeline control unit 103 attempts to start the pipeline processing, since the data in the address in the memory access request is currently stored in the request storing unit 1 and in the middle of the main storage access, there is no need to perform the main storage access again. For this reason, when the pipeline control unit 103 receives the address match notification, it sends a notification of the return instruction to the new request storing unit 102. As a result, the corresponding entry of the new request storing unit 102 is not released and enters the standby state. After the corresponding memory access request in the request storing unit 1 is executed and the cache tag unit 105 and the cache data storing unit 106 are updated, the pipeline processing of the memory access request that requests the same address in the new request storing unit 102 is performed. Accordingly, the memory access request meets a cache hit, and the corresponding data from the cache data storing unit 106 is Loaded onto the CPU core unit 100 of the requesting source.

Other than that, when an abort condition of the pipeline is satisfied in the pipeline control unit 103, a notification of a return instruction is sent from the pipeline control unit 103 to the new request storing unit 102 and the request storing unit 1. As a result, the corresponding entry in the new request storing unit 102 and the request storing unit 1 is not released, and enters the standby state.

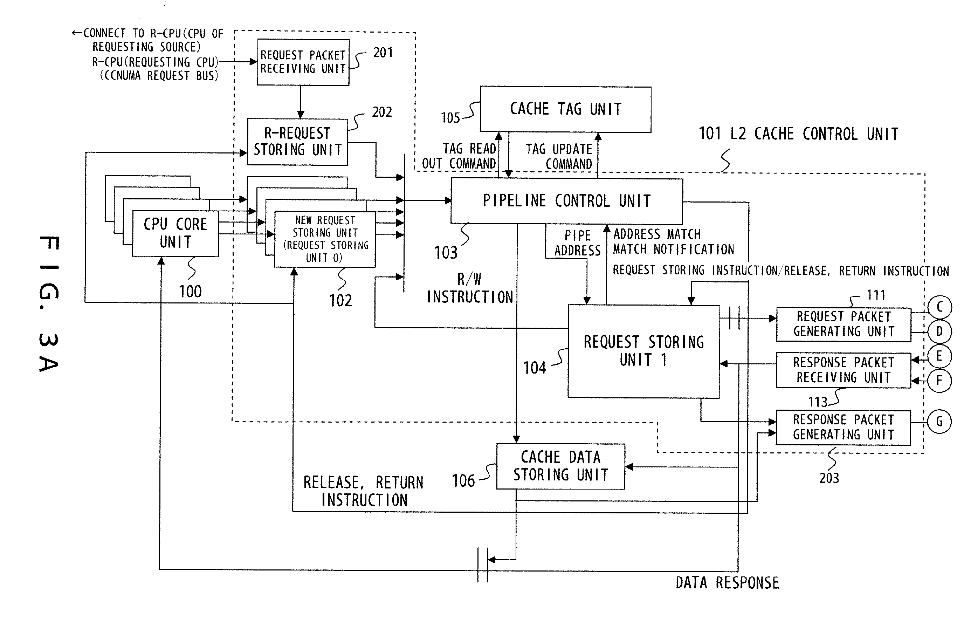

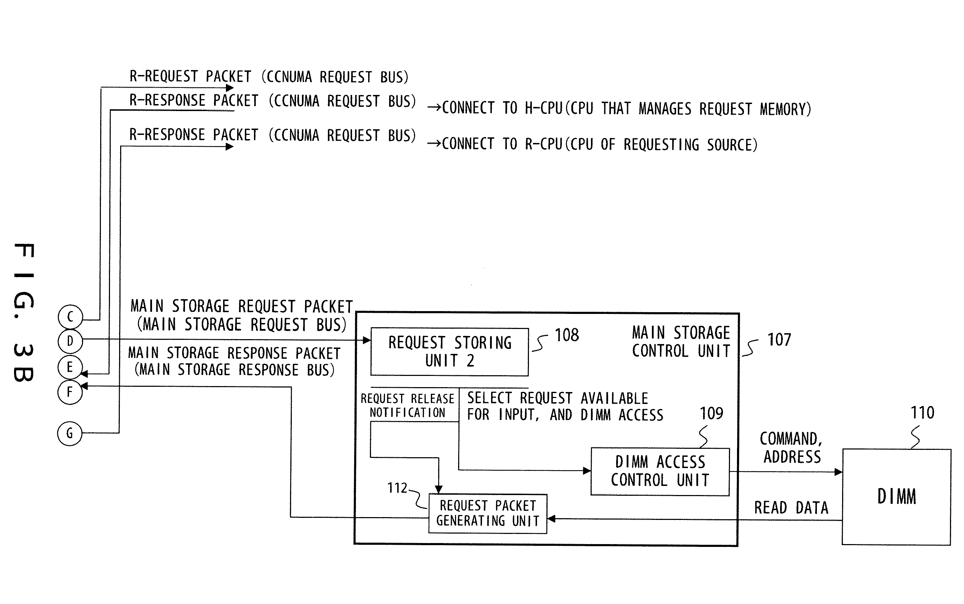

FIG.3A and FIG.3B are diagrams illustrating a generation configuration of an information processing apparatus having a mechanism to perform pipeline processing of a memory access request to the L2 cache memory and the main storage apparatus, and further having a CC-NUMA (Cache Coherent Non-Uniform Memory Access) function. In FIG.3A and FIG.3B, the same number is assigned to the part having the same function compared with the case in FIG.1A and FIG.1B.

The CC-NUMA function refers a function as described below. First, respective CPU core groups each consisting of a plurality of CPU core units 100 constitute nodes (hereinafter, simply referred to as a "CPU") each having an independent main storage bus and a DIMM 110. Then, the respective CPUs are connected to each other by a high-speed bus (CC-NUMA bus) / That is, the CC-NUMA in which a plurality of CPUs holds a cache of the shared memory resource is a distributed shared memory architecture in which the consistency of the data between caches is assured.

In FIG.3A, the function of a request packet generating unit 111' , a response packet receiving unit 113' , and a request packet receiving unit 201, an R-request storing unit 202, and a response packet generating unit 203 are added.

When the physical address of a memory access request issued from the request storing unit 1 to the request storing unit 2 is an address managed by its own CPU (hereinafter, the CPU is referred to as an "L-CPU (local CPU)", the request packet generating unit 111' executes the following operation. The request packet generating unit 111' sends out the memory access request having the physical address managed by the L-CPU to the main memory request bus in FIG. 3B as a main memory request packet. Meanwhile, when the physical address of a memory access request is an address managed by another CPU (hereinafter, the CPU is referred to as an "H-CPU (home CPU)", the request packet generating unit 111' executes the following operation. The request packet generating unit 111' sends out the memory access request to the CC-NUMA request bus in FIG.3B as an R-request packet (remote request packet).

The main request packet sent out to the main storage request bus is received by the request storing unit 2 in the main storage control unit 107 in FIG. 3B belonging to the L-CPU, in the same manner as in the case of FIG.1B, and the process after that is the same as the case in FIG.1A and FIG.1B.

Meanwhile, the R-request packet sent out to the CC-NUMA request bus for the H-CPU is received by the request packet receiving unit 201 in the L2 cache control unit 101 in FIG.3A. The request packet receiving unit 201 takes out the memory access request (hereinafter, this is referred to as an "R-request") issued by the CPU of the requesting source (hereinafter, this is referred to as an "R-CPU" (remote CPU)), and stores in the R-request storing unit 202. The R-request storing unit 202 has a plurality of entries, and has the same function as the new request storing unit 102.

The R-request stored in the R-request storing unit 202 is arbitrated with the memory access request stored in the new request storing unit 102 in the H-CPU, and is input into the L2-PIPE of the pipeline control unit 103 of the H-CPU. The operation after that is the same as the case in FIG.1A, FIG.1B.

Response data (in the case of a cache hit) read out from the cache data storing unit 106 of the H-CPU in response to the R-request or request data (in the case of a cache miss) obtained by the request storing unit 1 from the DIMM 110 (FIG.3B) of the H-CPU is processed as follows. The response packet generating unit 203 in FIG.3A sends out the obtained response data to the CC-NUMA response bus towards the R-CPU as an R-response packet. The R-response packet reaches the R-CPU and after that, is received by the response packet receiving unit 113' in FIG.3A from the CC-NUMA response bus in FIG.3B. The response packet receiving unit 113' takes out the response data from the R-response packet, and passes it to the CPU core unit 100 of the requesting source of the memory access request. The operation of this part is the same as the operation after the response packet receiving unit 113 in FIG.1A, FIG.1B receive the main storage response packet.

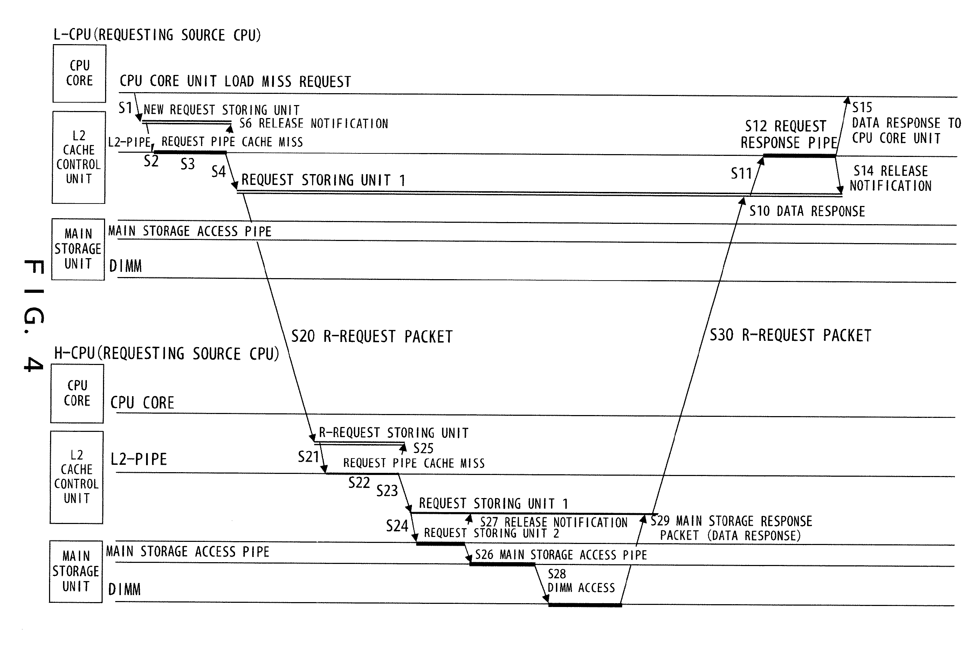

FIG.4 is an operation sequence diagram illustrating a pipeline process involving an access to the H-CPU in the L2 cache memory having the configuration in FIG.3A and FIG.3B. In FIG. 4, the same sequence number is assigned to the same sequence part in the case of FIG.2.

First, sequence S1 to S4 in which the memory access request is input into the L2-PIPE and meets a cache miss after that and stored in the request storing unit 1 is the same as in the same in FIG.2.

The memory access request stored in the request storing unit 1 is input to the request packet generating unit 111' in FIG.3A. The request packet generating unit 111' generates an R-request packet including the memory access request by judging the physical address of the memory access request. Then, the R-request packet is sent out to the CC-NUMA request bus for the H-CPU to be processed. The R-request packet sent out to the CC-NUMA request bus is received by the request packet receiving unit 201 in the L2 cache control unit 101 in FIG.3A. The request packet receiving unit 201 takes out the R-request issued by the CPU of the requesting source from the R-request packet, and stores it in the R-request storing unit 202 (up to here, sequence S20).

The R-request stored in the R-request storing unit 202 is arbitrated with the memory access request stored in the new request storing unit 102 in the H-CPU and is input into the L2-PIPE of the pipeline control unit 103 of the H-CPU (sequence S21).

When the R-request input in to the L2-PIPE of the H-CPU meets a cache miss in the L2 cache memory (sequence S22), the R-request that met the cache miss is stored in the request storing unit 1 of the H-CPU (sequence S23). Furthermore, the R-request is transmitted from the request packet generating unit 111' in FIG.3A to the main storage request bus in FIG.3B as a main storage request packet, and is stored in the request storing unit 2 in the main storage control unit 107 in FIG.3B (sequence S24). Meanwhile, from the pipeline control unit 103 to the R-request storing unit 202, a release notification of the entry corresponding to the R-request mentioned above is sent (sequence S25). Accordingly, the R-request storing unit 202 releases the entry corresponding to the R-request mentioned above, and the entry enters the state in which the next R-request may be received.

The memory access request held in the request storing unit 2 in the main storage control unit 107 of the H-CPU is input into the pipeline for access of the DIMM 110 in FIG.3B (described as the "main storage access pipe" of the H-CPU in FIG. 4) in order from the one having a processable bank address. The DIMM access control unit 109 in the H-CPU takes out the R-request from the request storing unit 2 (sequence S25), and also releases the entry of the request storing unit 2 and sends a notification of it to the request storing unit 1 (sequence S27). Accordingly, the request storing unit 2 enters the state in which a new memory access request may be received in the released entry. The DIMM access control unit 109 of the H-CPU generates a command and an address corresponding to the taken-out R-request, and executes a memory access to the DIMM 110 (sequence S26→S28).

When the memory access is completed in the DIMM 110 of the H-CPU, response data is transmitted from the DIMM 110 in FIG.3B of the H-CPU to the request storing unit 1 via the response packet generating unit 112, the main storage response bus, the response packet receiving unit 113' in FIG. 3A (sequence S29).

Furthermore, the response data mentioned above is input from the request storing unit 1 of the H-CPU to the response packet generating unit 203. Meanwhile, in the case of a cache hit, not a cache miss in sequence S22 in FIG.4, the data that met the cache hit in the cache data storing unit 106 in FIG.3A of the H-CPU is input to the response packet generating unit 203 as response data. The response packet generating unit 203 in H-CPU sends out the obtained response data to the CC-NUMA bus in FIG.3B for the R-CPU as an R-response packet (sequence S30). The R-response packet reaches the R-CPU, and after that, is received by the response packet receiving unit 113' in FIG.3A from the CC_NUMA response bus in FIG.3B. The response packet receiving unit 113' takes out the response data from the R-response packet and passes it to the request storing unit 1 in FIG.3A (sequence S10).

Next, from the request storing unit 1, via the pipeline control unit 103, the request response pipe is started on the L2-PIPE (sequence S11) . When any abort (discontinuation) condition is not satisfied in the request response pipe, the pipeline control unit 103 executes the writing of the response data into the cache data storing unit 106 and the update of the tag of the cache tag unit 105 (sequence S12). Furthermore, the pipeline control unit 103 performs data response to the CPU core unit 100 (sequence S13). Meanwhile, the data response to the CPU core unit 100 is executed when the memory access request is a Load request and is not a prefetch request. Lastly, a notification of the release of the entry of the corresponding memory access request is send to the request storing unit 1 (sequence S14). Accordingly, the corresponding entry of the request storing unit 1 is released.

Here, in any case of the configuration in FIG.1A, FIG.1B and the configuration of FIG. 3A, FIG. 3B described above, it is assumed that the cache assess of the L2 cache control unit 101 and the main storage access by the main storage control unit 107 to the DIMM 110 being the main storage apparatus both have a particular processing unit. Then, it is assumed that there is a relationship (the processing unit of the cache control apparatus) × integral multiplication (=the processing unit of the main storage apparatus). For example, it is assumed that the processing unit by the L2 cache control unit 102 to the cache tag unit 105 and the cache data storing unit 106 is 128 bytes and the processing unit by the main storage control unit to the DIMM 110 is 256 bytes. Here, when target data of the memory access request from the CPU core unit 100 is executed with the unit of 256 byte being the processing unit to the DIMM 110, the data processing efficiency may be improved if the taking in and out of data with the cache memory is also performed collectively for every two cache lines corresponding to 256 bytes. Meanwhile, in a case such as when target data of the memory access request from the CPU core is in a small data size and has a data size of 128 bytes or less, in the cooperation of the CPU core and the cache memory and the main storage apparatus, there is no need to put together the taking in and out of data with the cache memory in the unit of 256 bytes. However, in any case of the configuration in FIG.1A, FIG.1B, the configuration in FIG.3A, FIG.3B, in the cooperation of the CPU core and the cache memory and the main storage apparatus, cache control in view of the difference in the data sizes of the respective processing units was not performed. For this reason, the efficiency of the cache control does not become optimal.

Then, the embodiment explained below makes it possible to perform cache control in view of the difference in the data sizes of the respective processing units in the cooperation of the CPU core unit and the cache memory and the main storage apparatus.

In the present embodiment, there are one or a plurality of units of CPU core unit being the data requesting source, and an L2 cache control unit being a data processing apparatus that receives a request from the data requesting source. The data processing apparatus is further connected to a request bus that makes a request for data to an external apparatus, by a response bus that receives data. It is assumed that the data processing apparatus and the external apparatus both has a particular processing unit, and there is a relationship "the processing unit of the data processing apparatus) × integral multiplication = (the processing unit of the external apparatus)". Then, in the present embodiment, when requests are issued from the data requesting source to the data processing apparatus as a request group that may be put together as a processing unit of the external apparatus, the data processing apparatus assigns an ID that is common to the request group, and the data processing apparatus performs the process for each request in units of the particular unit. As a result of the process, when a request is made to the external apparatus, the transmission unit or the receiving unit of the request bus detects the match of the attached ID in respective requests and put them together as one request in the processing unit of the external apparatus. When the external apparatus makes a response of data to the data processing unit, the transmitting unit or the receiving unit of the response bus divides it in the unit of the data processing apparatus and executes the process.

In the present embodiment, in the configuration described above, the data processing unit has a table that indicates whether or not the ID is in the valid state, and selects an ID that is not in the valid state to determine the ID to assign. The table is constituted by a part or all of the logic ORs in (1), (2), (3) of the elements below.
(1) A signal in a format converted from a valid signal of a request storing unit entry to a valid signal of each ID by the combination logic of a signal indicating the validity of the entry of a request storing unit 0 storing a new request from each data requesting source and a decode value of the attached ID.
(2) A valid flag of each ID that indicates that the corresponding request is in the middle of pipeline processing.
(3) Each ID valid flag that indicates that the corresponding request is in the middle of memory access to the main storage and occupying the request storing unit in the cache control unit.

Accordingly, the segmentation and continuity of the pipeline process of the request operation to the main storage may be increased. Then, it becomes possible to realize the optimal main storage access size while maintaining the optimal cache line size, and also without affecting the cache control system. Furthermore, by detecting whether the ID exists in the entry of the request storing unit 0, exists in the request in the middle of the pipeline process, exists in the request in the middle of access to the main storage, it becomes possible to detect an available ID certainly.

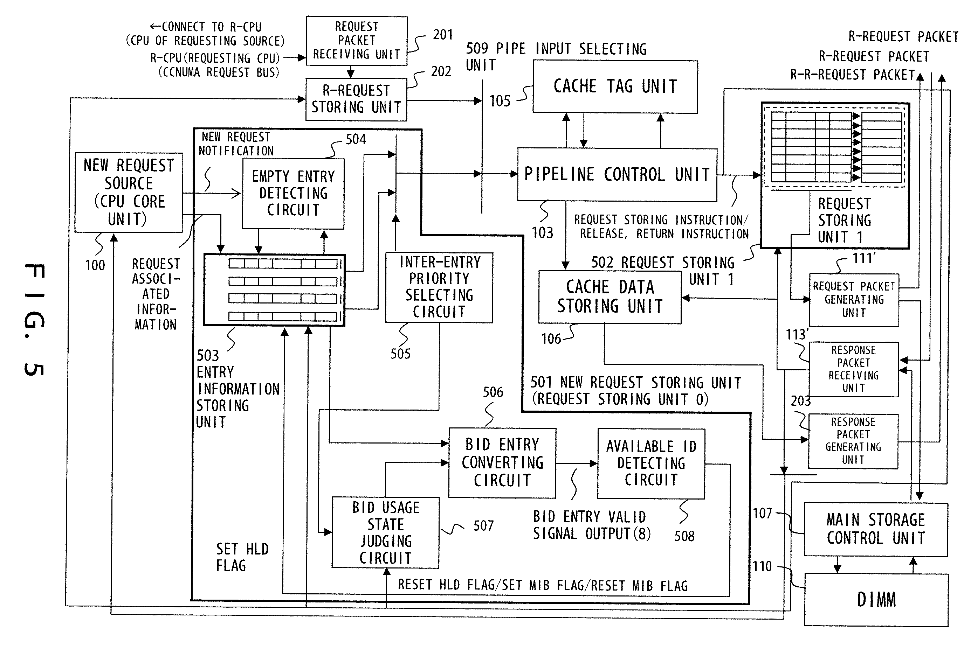

The present embodiment that realizes the function described above is an information processing apparatus basically based on the system configuration in FIG. 3A and FIG. 3B, and includes a CC-NUMA function that has a system configuration illustrated in FIG. 5 in which it is improved. In FIG. 5, the same number is assigned to the part having the same function as in FIG.3A, FIG.3B.

In the present embodiment, first, a new request storing unit 501 (hereinafter, referred to as a "request storing unit 0") includes an entry information storing unit 503, an empty entry detecting circuit 504, an inter-entry priority selecting circuit 505, a BID entry converting circuit 506, a BID usage status judging circuit 507, an available ID detecting circuit 508.

In the entry information storing unit 503, one or more entries are implemented corresponding to each of one or more CPU core units 100. When a cache miss occurs in the L1 (primary) cache in the CPU core unit 100, the entry information storing unit 503 holds the memory access request for pipeline processing in the L2 (secondary) cache memory. The empty entry detecting circuit 504 detects and selects, in a plurality of entries in the entry information storing unit 503, an entry in the empty in state.

In the present embodiment, a plurality of memory access requests for successive areas in the DIMM 110 being the main storage apparatus are associated with each other and held in respective entries of the entry information storing unit 503. More specifically, the plurality of the memory access requests are associated with each other based on a burst ID (hereinafter, referred to as a "BID") being a successive access identifier held in a plurality of entries that the entry information storing unit 503 has. The BID is assigned to, for example the three bits from the second bit to the 0th bit of the bit string that constitutes the entry, Therefore, in the present embodiment, in the pipeline process of the cache control, up to the cube of 2=8 pieces of the plurality of associated memory access requests mentioned above may be managed at the same time.

The BID entry converting circuit 506, the BID usage status judging circuit 507, and the available ID detecting circuit 508 operate as an identifier assigning circuit to assign the BID being the successive access identifier. The BID entry converting circuit 506 is a logic circuit that converts each entry value in the entry information storing unit 503 into a BID value used for each entry. Meanwhile, the BID usage status judging circuit 507 is a logic circuit that judges the current usage state of each BID value in the pipeline process of the cache control. By the BID entry converting circuit 506 and the BID usage status judging circuit 507. the BID value currently used validly is detected. Based on the detection result, when an entry that involves the registration of the BID value is registered in the entry information storing unit 503, the available ID detecting circuit 508 detects the BID in the available status other than the value of the BID currently used validly and sets it to the entry to be registered.

The inter-entry priority selecting circuit 505 selects, in the entries registered in the entry information storing unit 503, an unprocessed entry, and inputs it into the pipeline control unit 103 via a pipe input selecting unit 509. Regarding entries in which a plurality of memory access requests for successive areas of the DIMM 110 that are associated with each other and registered according to the BID The inter-entry priority selecting circuit 505, the inter-entry priority selecting circuit 505 inputs the plurality of memory access requests (two memory access requests for example) that has the data size of the cache memory (128 bytes for example) successively into the pipeline control unit 103. The pipe input selecting unit 509 selects the memory access request from the request storing unit 0 selected in view of the priority by the inter-entry priority selecting circuit 505 and the memory access request stored in the entry of the R-request storing unit 202 and input them into the pipeline control unit 103.

In the pipeline control unit 103, when a cache miss occurs to the input memory access request, the memory access that met the cache miss is store in an entry in the request storing unit 1 502 (hereinafter, simply referred to as a "request storing unit 1"). At this time, the BID stored corresponding to the memory access in the entry in the entry information storing unit 503 in the request storing unit 0 is stored in the entry in the request storing unit as associated information of the memory access request.

Then, when a main storage request packet or an R-request packet is sent out from the request storing unit 1 via the request packet generating unit 111' to the main storage control unit 107 in the L-CPU or to the H-CPU, the following control is executed. The request packet generating unit 111' generates and sends out a main storage request packet or an R-request packet in which a plurality of memory access requests with a matching BID in the respective entries of the request storing unit 1 are combined. As a result, in the request storing unit 2 that is not particularly described in the drawing in the main storage control unit 107 of the L-CPU or in the H-CPU, the memory access request is issued in the processing unit (256 bytes for example) of the DIMM 110 being the main storage apparatus, and it becomes possible to realize an efficient main storage access.

Meanwhile, when the R-request described above is issued, in the H-CPU, the request packet receiving unit 201 in FIG.5 separates the combined memory access requests (256 bytes for example) in the R-request packet so as to have the same BID (into two 128 bytes for example) and stores them in the R-request storing unit 202. That is, the R-request storing unit 202 is able to manage the BID while having the same configuration as the entry information storing unit 503 in the request storing unit 0. Then, in the H-CPU, the memory access request described above is first input into the pipeline control unit 103 in the separated form (two 128 bytes for example). As a result, when a cache miss occurs and a memory access to the DIMM 110 is needed, the following control is executed. The request packet generating unit 111' generates a main storage request packet (256 bytes for example) in which R-requests (128 bytes each for example) with a matching BID are combined, and sends it out to the main storage control unit 107. As described above, it becomes possible to execute the memory access request in the data size suitable for each of the cache memory and the main storage apparatus, in the remote access request to the H-CPU as well.

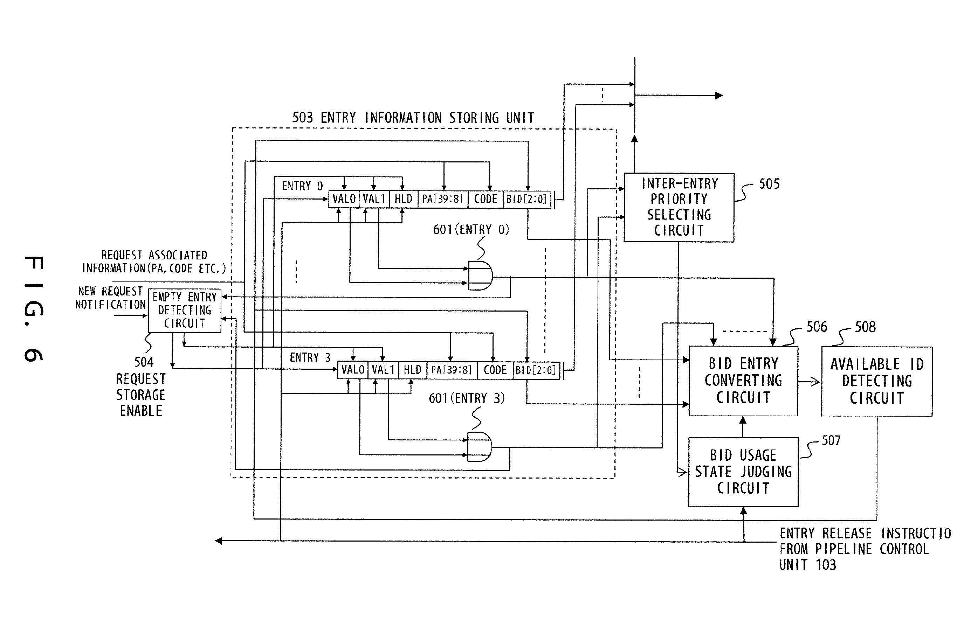

FIG.6 illustrates a configuration example of the entry information storing unit 503 in the request storing unit 0. In the configuration example in FIG.6, the entries are constituted by four entries from an entry 0 to an entry 4. Each entry stores six pieces of information VAL0(Valid0), VAL1(Valid1), HLD(Hold), PA(Physical Address), CODE, BID(Burst-ID) in each field of the entry.

PA(Physical Address) is a physical address requested in the memory access request, and PA[39:8], that is, 32 bits from the 39th bit to the 8th bit of the address data requested by the memory access request are kept. This represents the address of the 256 byte boundary. Next, in the case of VAL0=1, it indicates that the memory access request in which PA[7]=0, that is, the 7th bit of the physical address requested in the memory access request is 0 is registered validly. Then, in the case of VAL0=0, it indicates that a the memory access with PA[7]=0 is not registered. Meanwhile, in the case of VAL1=1, it indicates that the memory access in which PA[7]=1, that is, the 7th bit of the physical address requested in the memory access request is registered validly. Then, in the case of VAL1=0, the memory access request with PA[7]=1 is not registered.

PA[39:7] is determined by PA[39:8] and VAL0 or VAL1. In that, the 21 bits from the 39th bit to the 19th bit of the PA represent the tag on the cache memory (the cache tag unit 105 and the cache data storing unit 106). In addition, the 12 bits from the 18th bit to the 7th bit represent the index (=the number of cache lines). That is, the number of cache lines of the L2 cache memory in the present embodiment is the 12th power of 2=4096 lines. Meanwhile, while not clearly described in FIG. 6, the 7 bits from the 6th bit to the 0th bit of the PA specified by the memory access request represent the offset address in the same cache line.

Meanwhile, in the present embodiment, in the case of VAL0=1 and VAL1=1, it represents that the memory access of the entry is valid as a memory access request for data of 128 bytes with PA[7]=0 and 128 bytes with PA[7]=1 following the 128 bytes with PA[7]=0,256 bytes in total. That is, in the present embodiment, in one entry, the request storing unit 0 is able to either store a memory access request of 256 bytes or to store a memory access request of 128 bytes. That is, the entry of the request storing unit 0 is able to share and hold two 128-byte memory access requests of the 256 byte boundary.

in the entries 0-3 illustrated in FIG.6, in the case of VAL0=0, VAL1=0, it represents that no memory access request is stored in the entry, that is, the entry is in the empty state. According to this, it follows that the validity/invalidity (whether in the registered or unregistered state) of the entry may be expressed by OR(VAL0| VAL1) or VAL0 and VAL1. In FIG.6 OR gates 601 (entry 0)-601 (entry 3) output the validity/invalidity of the respective entries 0-3. When either of VAL0, VAL1 is 1, the output of the OR gates 601 (entry 0) -601 (entry 3) is 1. According to it, a prescribed entry is selected by the inter-entry priority selecting circuit 505, and the correspondence relationship between the entry and the BID is determined by the BID entry converting circuit 506. Then, information indicating a particular BID of a particular entry is output from the BID entry converting circuit 506.

In the entries 0-3 illustrated in FIG.6, HLD represents that either one or both of VAL0, VAL1 in the memory access request of the entry are in the middle of a pipeline request or in the middle of processing of the pipeline. Regarding the entry in which HLD is on, the inter-entry priority selecting circuit 505 does not select as an entry to perform a new pipeline process.

Each information VAL0, VAL1, HLD is cleared by an entry release notification from the pipeline control unit 103.

In the entries 0-3 illustrated in FIG.6, CODE represents the request type of the memory access request registered in the entry. The assignment is made as follows for example.

CODE=01 : LD-SH(Shared-type request of LD (Load) request)
CODE=02 : LD-EX (Exclusive type request of LD (Load) request)
CODE=11 : STRONG-PF-SH(Shared (SHared) type request of STRONG-PF (STRONG Prefetch) request)
CODE=12 : STRONG-PF-EX(Exclusive type (EXclusive) request of STRONG-PF (STRONG Prefetch) request)
CODE=31 : WEAK-PF-SH(Shared type (SHared) request of WEAK-PF (WEAK Prefetch) request)
CODE=32 : WEAK-PF-EX(Exclusive type (EXclusive) request of WEAK-PF (WeakPrefech) request)
Each request type is described later.

Next, when registering a new memory access request, an available (empty) burst ID detected by the available ID detecting circuit 508 is assigned to and stored in BID[2:0]. When selecting an entry with VAL0=1, VAL1=1 in which a 256-byte memory access request, the inter-entry priority selecting circuit 505 performs the following control. The inter-entry priority selecting circuit 505 attaches the same BID to two requests separated into a memory access request with PA[7]=0 and a memory access request with PA[7]=1, 128 bytes each, and inputs those memory access requests into the pipeline control unit 103. At this time, it is desirable that a pipe input selecting unit that is not particularly described in the drawing in the pipeline control unit 103 successively selects memory access requests with the same BID. This is because, as a result, memory access requests with the same BID are stored successively in the request storing unit 1, and the detection rate of the match of the BID in the request storing unit 1 improves.

While not particularly illustrated in the drawing, the configuration of the R-request storing unit 202 also has VAL0, VAL1, HLD, PA[39:8], CODE, BID[2:0] in the same manner as the request storing unit 0 described above, and is able to store both the 128-byte request and the 256-byte request.

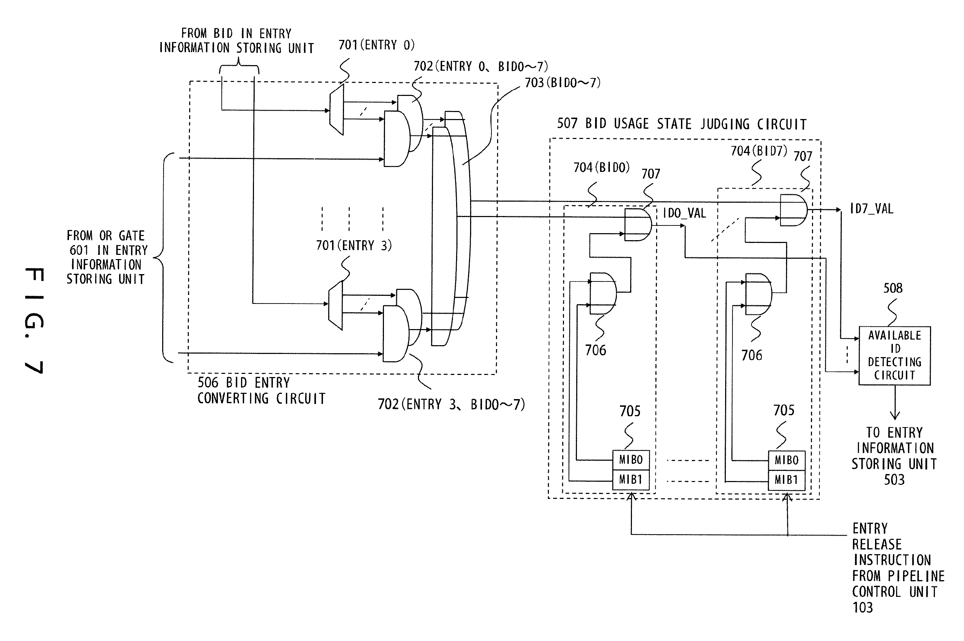

FIG. 7 is a circuit configuration diagram (part 1) of the BID entry converting circuit 506 and the BID usage status judging circuit 507 in FIG.5.

The BID entry converting circuit 506 in FIG. 5 includes decoders 701 (entry 0)-701 (entry 3), AND gates 702 (entry 0, BID=0-7)-702 (entry 3, BID=0-7), OR gates 703 (BID=0-7).

The four decoders 701 (entry 0)-701 (entry 3) respectively decode BID[2:0] of the respective three bits of the respectively entries 0-3 in the entry information storing unit 503 in FIG. 6. As a result, eight output lines in which either one of the outputs turns on according to the 3-bit value of BID[2:0] are output.

In the eight AND gates 702 (entry 0, BID=0-7)-702 (entry 3, BID=0-7), the respective outputs of the decoders 701 (entry 0) are input to the first input of each, and the output of the OR gate 601 (entry 0) in FIG.6 is input to the second input of each. As a result, when the memory access request of the entry 0 in the entry information storing unit 503 in FIG.6 is valid, according to the 3-bit value of BID [2: 0] of the entry 0, either one of the outputs of the eight AND gates 702 (entry, BID=0-7) turns on, and the output of the corresponding one of the OR gates 703 (BID=0-7) turns on. Accordingly, a particular BID stored in a particular entry is output from the BID entry converting circuit 506, and the usage state of the BID including whether the BID is empty or not is judged by the BID usage status judging circuit 507.

In the eight AND gates 702 (entry 1, BID=0-7) the respective output of the decoder 701 (entry 1) are input to the first input of each, and the output of the OR gate 601 (entry 1) in FIG.6 is input to the second input of each. As a result, when the memory access request of the entry 1 in the entry information storing unit 503 in FIG.6 is valid, according to the 3-bit value of BID[2:0] of the entry 1, either one of the outputs of the AND gates 702 (entry, BID=0-7) turns on, and the corresponding one of the output of the corresponding one of the OR gates 703 (BID=0-7) turns on.

It is the same for the respective eight AND gates 702(entry 2, BID=0-7)-702(entry 7, BID=0-7) for the other entries 2-7.

As a result, in each entry of the entry information storing unit 503 in FIG.6, according to the BID of the entry registered validly, the output of the OR gate corresponding to each BID registered validly in the eight OR gates 703 (BID=0-7) turns on.

Next, the BID usage status judging circuit 507 in FIG. 5 includes eight each BID value usage state judging circuits 704 (BID=0-7). The respective each BID value usage state judging circuits 704 executes the following operation for each BID value, when the output of the OR gate 703 corresponding to each BID value is on. When the memory access request having each BID value acquires an entry of the request storing unit 1 in FIG.5 and is waiting for a response to the issued response to the main storage apparatus and the H-CPU, the on output of the OR gate 703 is output to the available ID detecting circuit 508. More specifically, The respective each BID value usage state judging circuits 704 include a register group 705 in which two pieces of information MIB0 and MIB1 are held regarding each BID value. Furthermore, an OR gate 707 that outputs OR of the output of the OR gate 703 corresponding to each BID value and the output of the OR gate 706 is included. Here, the MIB0 turns on when, in the memory access requests for which a the corresponding BID value is set, the request of VAL0=1 (PA[7]=0) meets a cache miss and is stored in the request storing unit 1 in the pipeline process. Then, the MIB0 turns on when, after response data is received regarding the memory access, the request response pipe is completed without abort, and the request is released from the request storing unit 1. In the same manner, MIB1 turns on when, in the memory access requests for which a the corresponding BID value is set, the request of VAL1=1 (PA[7]=1) meets a cache miss and is stored in the request storing unit 1 in the pipeline process. Then, the MIBO turns on when, after response data is received regarding the memory access, the request response pipe is completed without abort, and the request is released from the request storing unit 1. Therefore, the MIB0 and MIB1 represent a state in which the memory access request that has acquired the BID has acquired an entry of the request storing unit 1. Therefore, when the MIB0, MIB1 are off (0), information representing a particular BID or a particular entry is input from the BID entry converting circuit 506 to the available ID detecting circuit 508, and whether or not the BID is available is detected.

By the BID entry converting circuit 506 and the BID usage status judging circuit 507 described above, in the period in which the BID value is registered in each entry of the entry information storing unit 503 in FIG. 6, an on signal indicating that each BID value is being used is output to the available ID detecting circuit 508. Alternatively, in the period in which the memory access request having each BID value is in a state in which it has required an entry of the request storing unit 1 in FIG.5 and is waiting for a response after a request is issued to the main storage apparatus and the H-CPU, an on signal indicating that each BID value is being used is output to the available ID detecting circuit 508. Upon receiving each on signal indicating that each BID value is being , the available ID detecting circuit 508 is able to output one of the BID values for which the on signal is not input, to the entry information storing unit 503 in FIG.5 and FIG.6.

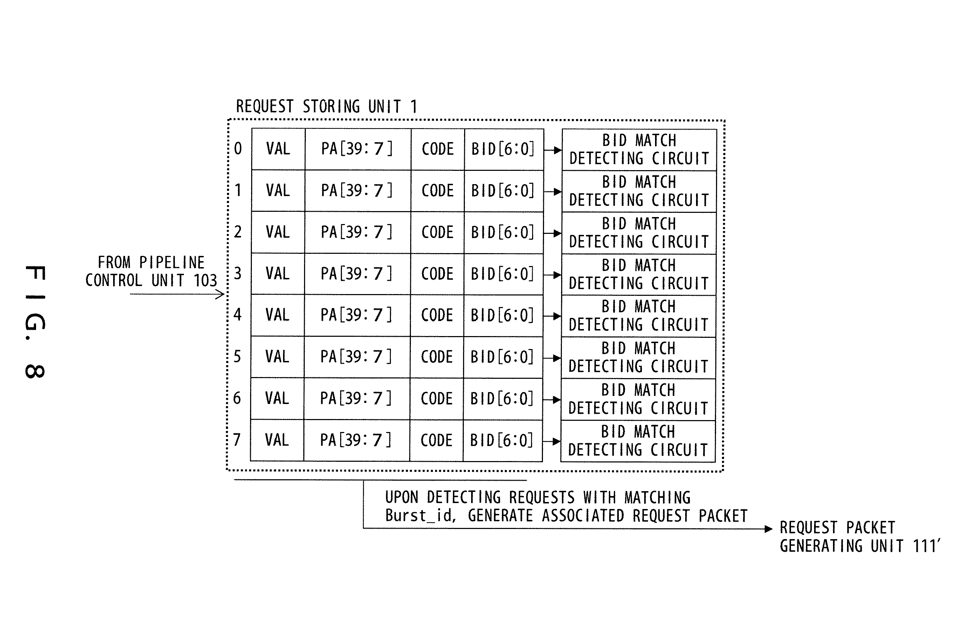

FIG.8 illustrates a content example of an entry of the request storing unit 1 in FIG.5. Unlike the request storing unit 0, the request storing unit 1 stores only the memory access request of 128 bytes in one entry. That is, the requests processed separately in units of 128-byte requests are stored in the request storing unit 1 separately. In the request storing unit 1, a process is performed for combine them as a 256-byte request again with the BID being the key.

In the entry in the request storing unit 1, VAL (Valid) is flag information indicating whether or not the entry itself is valid.

In the entry in the request storing unit 1, PA[39:7] is data in which, to PA[39:8] stored in the entry of the request storing unit 0, PA[7]=0 is added when VAL0=1, and PA[7]=1 is added when VAL1=1. When VAL0=1 and VAL1=1, it is data in which, to PA[39:8], PA[7]=0 is added in the first memory access request, and PA[7]=1 is added in the second memory access request.

In the entry of the request storing unit 1, CODE is a copy of CODE data representing the type of the memory access stored in the entry of the request storing unit 0 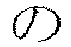 entry.

In the entry of the request storing unit 1, in the BID, to 3-bit BID [2: 0] stored in the entry of the request storing unit 0, following information is added for example. For example, to BID[2:0], a 2-bit request CPU_ID[1:0] that identifies the CPU of the requesting source, and a 2-bit CORE_ID[1:0] that identifies the CPU core unit 100 of the requesting source are added, and is registered as BID[6:0] of a total of 7 bits.

In the example of FIG.8, the request storing unit 1 has eights entries from the entry 0 to the entry 7. In the request storing unit 1, the BID value of each entry is input to a BID match detecting circuit. The BID match detecting circuit of each entry may be realized by an AND gate group that obtains AND logic of the BID value of the entry and the BID value of each of the other entries. Then, in each BID match detecting circuit, when a memory access request with a matching BID is detected, the request packet generating unit 111' in FIG.5 generates and outputs a main storage request packet or an R-request packet in which those memory access requests are combined.

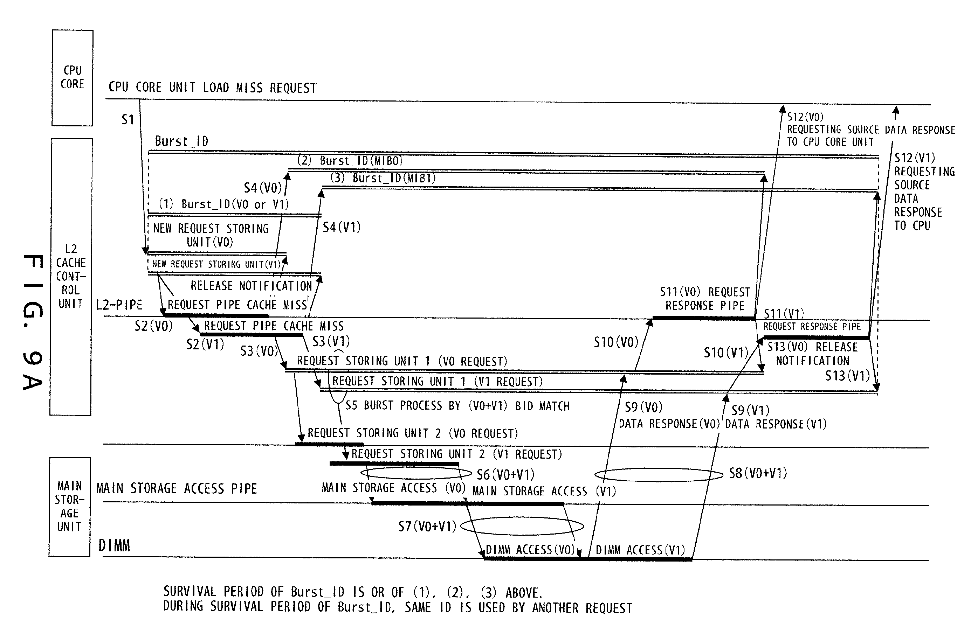

FIG.9A is an operation sequence diagram illustrating a burst access for the L-CPU in the L2 cache memory having the configuration in FIG.5 and FIG.7.

First, when the CPU core unit 100 for example misses a load instruction of a 256-byte request, and an access to the L1 (primary) cache memory in the CPU core is missed, a new memory access request is issued to the new request storing unit 102. At this time, entry registration of the 256-byte request is performed with VAL0 (described as "VAL0" in the drawing. The same applies hereinafter.) =1, VAL1(described as "VAL1" in the drawing. The same applies hereafter) =1. Then, to the entry, a BID (described as "Burst_ID" in the drawing. The same applies hereinafter) (up to here, sequence S1).

The 256-byte memory access request is divided into two 128-byte requests and input from the new request storing unit 102 to the pipeline the L2-PIPE of the L2 cache memory. At this time, VAL0=1 and PA[7]=0 is set for the first memory access request, and VAL1=1 and PA[7]=1 is set for the second memory access request (sequence S2(VAL0), S2(VAL1)).

When each memory access request input into the L2-PIPE each meets a cache miss in the L2 cache memory, each memory access request that met the cache miss is stored in the request storing unit 1 successively (sequence S3(VAL0), S3(VAL1)). At this time, to the two memory access requests, the same BID is attached. From the pipeline control unit 103 to the new request storing unit 102, a release notification of the entry corresponding to each of the memory access requests is sent (sequence S4(VAL0), S4(VAL1)). Accordingly, the new request storing unit 102 releases the 256-byte request entry corresponding to each of the memory access requests, and the entry enters a state in which the next memory access request may be received.

Next, the request packet generating unit 111' detects two memory access request with the same BID on the request storing unit 1. Then, the request packet generating unit 111' combines (burst process) those memory access requests as a 256-byte request, and forwards it to the request storing unit 2 that is not particularly illustrated in the main storage control unit 107, as one main memory request packet (sequence S5(VAL0+VAL1).

The 256-byte access memory held in the request storing unit 2 in the main storage control unit 107 is input to the pipe line for access in the DIMM 110 (described as "main storage access pipe"in FIG. 9A) (sequence S6(VAL0+VAL1)). As a result, to the DIMM 110, a memory access in the processing unit of 256 bytes is executed (sequence S7(VAL0+VAL1)).

When the memory access in the DIMM 110 is completed, from the DIMM 110, via the main storage response bus, a main storage response packet including response data in units of 256 bytes is received by the response packet receiving unit 113' in FIG.3A (sequence S8(VAL0+VAL1)). After taking out the response data in units of 256 bytes from the main storage response packet, the response packet receiving unit 113' divides it into two memory access requests in units of 128 bytes, and passes them to the request storing unit 1 (sequence S9(VAL0), S9(VAL1)).

As a result, from the request storing unit 1, via the pipeline control unit 103, each request response pipe corresponding to the two memory access request is started on the L2-PIPE (sequence S10(VAL0), S10(VAL1)). When any abort (discontinuation) condition does not occur in each request response pipe, the pipeline control unit 103 executes the writing of each response data into the cache data storing unit 106 and the update of each tag of the cache tag unit 105 (sequence S11(VAL0), S11(VAL1)). Furthermore, the pipeline control unit 103 performs the respective data response corresponding to the two memory access requests to the CPU core unit 100 (sequence S12(VAL0), S12(VAL1)). Meanwhile, the data response to the CPU core unit 100 is executed when the memory access request is a Load request and is not a prefetch request. Lastly, a notification of the release of each entry of the corresponding memory access request is send to the request storing unit 1 (sequence S13(VALO), S13(VAL1)). Accordingly, the corresponding entry of the request storing unit 1 is released.

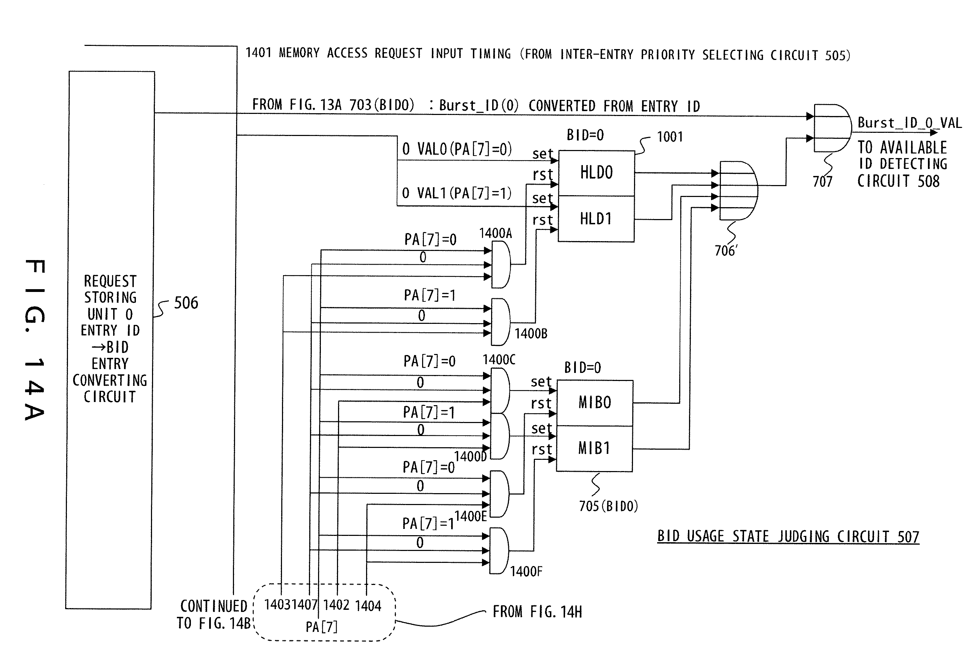

In the configuration described above, by the BID entry converting circuit 506 and the BID usage status judging circuit 507 in FIG.7 described above, the BID survives in the system in the following period. First, it is a period in a period in which the BID value is registered validly in each entry, an on signal (ID0_VAL-ID7_VAL in FIG.7) indicating that each BID value is being used is output from the OR gate 707. This corresponds to the period of (1) in FIG.9A until the corresponding entry in which the VAL0 and VAL1 are respectively registered is released. Alternatively, it is a period in which, when the memory access request having each BID value has acquired an entry in the request storing unit 1 in FIG.5 and is waiting for a response after a request to the main storage apparatus and the H-CPU is issued, an on signal (ID0_VAL-ID7_VAL) indicating that each BID value is being used is output from the OR gate 707. This is a period of FIG.9A(2) in which MIB0=1, or FIG. 9A (3) in which MIB1=1. Accordingly, the register group 705 in FIG.7 is set and the output (ID0_VAL-ID7_VAL) of the OR gate 706, the OR gate 707 turns on. The period (2) in which MIB0=1 relates to the memory access request corresponding to VAL0, and starts with the output of an entry acquisition notification of the request storing unit 1 from the pipeline control unit 103 regarding the memory access request corresponding to VAL0, and ends with the output of a pipeline process success notification (entry release notification) when the request response pipe is completed. The period (3) in which MIB1=1 relates to the memory access request corresponding to VAL1, and starts with the output of an entry acquisition notification of the request storing unit 1 from the pipeline control unit 103, and ends with the output of a pipeline process success notification (entry release notification) when the request response pipe is completed. The mechanism to update the MIBO and MIB1 in the register group 705 in FIG. 7 is described later in the explanation of FIG.14A through FIG. 14H. In the survival period of the BID described above, regarding the BID value, an on signal is input from the corresponding each BID value usage state judging circuit 704 in FIG.7 to the available ID detecting circuit 508, the BID is not to be used by another memory access request.

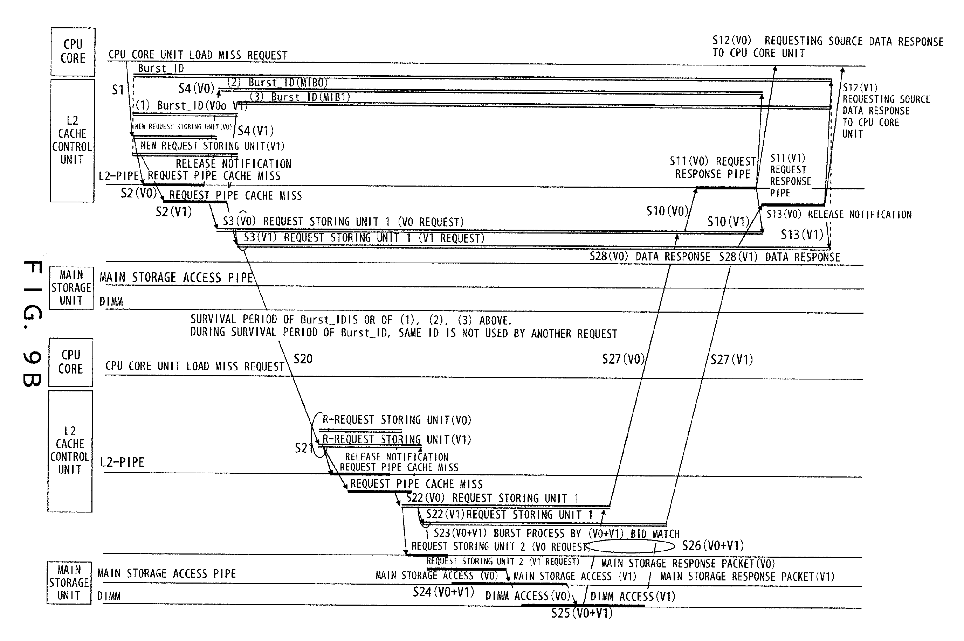

FIG.9B is an operation sequence diagram illustrating a burst access to the H-CPU in the L2 cache memory having the configuration in FIG.5 and FIG.7.

In FIG.9B, the same sequence number is assigned to the same sequence part in the case of FIG.9A.

First, sequences S1, S2(VAL0) and S2(VAL1), S3(VAL0) and S3(VAL1), S4(VAL0) and S4(VAL1) in which the memory access request is input to the L2-PIPE and causes a cache miss after that, and is stored in the request storing unit 1 is the same as in the case of FIG.9A.

Two memory access requests having the same BID stored in the request storing unit 1 are input to the request packet generating unit 111' in FIG.5. The request packet generating unit 111' generates an R-request packet including the memory access request, by judging the physical address of the memory access request. At this time, the request packet generating unit 111' detects two memory access request with the same BID on the request storing unit 1. Then, the request packet generating unit 111' combines those memory access requests into a 256-byte request, and sends it out onto the CC-NUMA request bus as one R-request packet. The R-request packet sent out to the CC-NUMA request bus. The R-request packet sent out to the CC-NUMA request bus is received by the request packet receiving unit 201 in FIG.5 in the H-CPU. The request packet receiving unit 201 takes out the combined two R-request issued at the CPU of the requesting source from the R-request packet, and setting both the VAL0 and VAL1 to 1, stores them in one entry of the R-request storing unit 202 (up to here, sequence S20).

The R-request stored in the R-request storing unit 202 is selected by the pipe input selecting unit 509, and is input as two requests of the 128-byte processing unit into the L2-PIPE of the pipeline control unit 103 of the H-CPU (sequence S21).

When each of the R-requests input to the L2-PIPE of the H-CPU meets a cache miss in the L2 cache memory, each of the R-requests that met the cache miss are stored in the request storing unit 1 of the H-CPU successively (sequence S22(VAL0), S22(VAL1)). Furthermore, those R-requests are stored from the request packet generating unit 111' in FIG.5 of the H-CPU into the request storing unit 2 that is not particularly illustrated in the main storage control unit 107 of the H-CPU. At this time, the request packet generating unit 111' detects two R-requests with the same BID on the request storing unit 1. Then, the request packet generating unit 111' combines (burst process) those memory access requests as a 256-byte request, and forwards it to the request storing unit 2 that is not particularly illustrated in the drawing in the main storage control unit 107 as one main storage request packet (sequence S23(VAL0+VAL1).

The 256-byte memory access request held in the request storing unit 2 in the main storage control unit 107 of the H-CPU is input into the main storage access pipe for access of the DIMM 110 of the H-CPU (sequence S24 (VAL0+VAL1)) . As a result, to the DIMM 110 of the H-CPU, a memory access in the processing unit of 256 bytes is executed (sequence S25(VAL0+VAL1)).

When the memory access in the DIMM 110 of the H-CPU is completed, a main storage response packet including response data in the unit of 256 bytes is forwarded to the response packet receiving unit 113' of the H-CPU from the DIMM 110 (sequence S26(VAL0+VAL1)). The response packet receiving unit 113' of the H-CPU takes out the response data in the unit of 256 byte and after that, divides into response data corresponding to two memory access requests in the unit of 128 bytes and pass them to the request storing unit 1 of the H-CPU.

Furthermore, each of the response data is input from the request storing unit 1 of the H-CPU to the response packet generating unit 203. Meanwhile, in the case of a cache hit, not a cache miss in sequence S21 in FIG. 9B, each data that met cache hit in the cache data storing unit 106 in FIG.5 of the H-CPU is input t the response packet generating unit 203 as each response data. The response packet generating unit 203 of the H-CPU sends out each of the response data to the CC-NUMA response bus for the CPU (R-CPU) of the requesting source as each R-response packet (sequence S27(VAL0), S27(VAL1)). This R-response reaches the CPU of the requesting source and after that, is receives by the response packet receiving unit 113' in FIG. 5. The response packet receiving unit 113' takes out each response data from each R-response packet and passes it to the request storing unit 1 in FIG.5 (sequence S28(VAL0) S28(VAL1)).

Next, in the CPU of the requesting source, from the request storing unit 1 to the pipeline control unit 103, the request response pipe is started on the L2-PIPE (sequence S10(VAL0), S10(VAL1)). When any abort (discontinuation) condition does not occur in each request response pipe, the pipeline control unit 103 executes the writing of each response data into the cache data storing unit 106 and the update of each tag of the cache tag unit 105 (sequence S11(VAL0), S11(VAL1)). Furthermore, the pipeline control unit 103 performs the respective data response to the CPU core unit 100 (sequence S12(VAL0), S12(VAL1)). Meanwhile, the data response to the CPU core unit 100 is executed when the memory access request is a Load request and is not a prefetch request. Lastly, a notification of the release of the entry of the corresponding memory access request is send to the request storing unit 1 (sequence S13(VALO), S13(VAL1)). Accordingly, the corresponding entry of the request storing unit 1 is released.

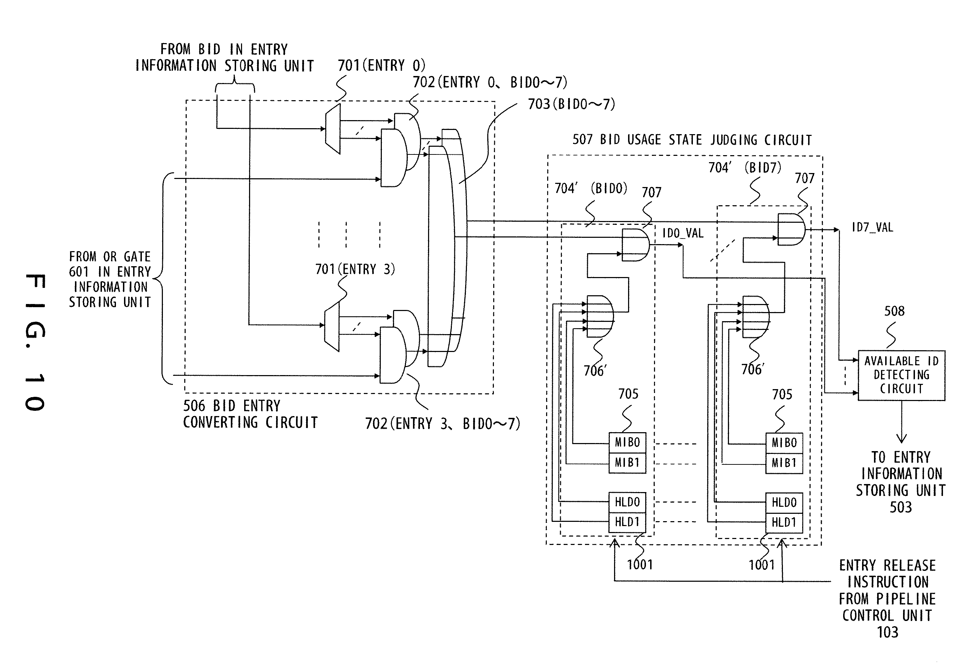

FIG. 10 is a circuit configuration diagram (part 2) of the BID entry converting circuit 506 and the BID usage status judging circuit 507 in FIG.5. The same number is assigned to the part having the same function as in the circuit configuration diagram (part 1) in FIG.7.

In FIG.10, the BID usage status judging circuit 507 is constituted by eight each BID value usage state judging circuits 704'(BID=0-7). Then, when judging the usage state of the BID in the respective each BID value usage state judging circuits 704' , not only the register group 705 in which the MIB0 and MIB1 are held, but also a register group 1001 in which two flags HLD0 and HLD1 are held is referred to, and OR is obtained in an OR gate 706'.

The HLD0 and HLD1 flags indicate that the request of the BID is in the middle of flowing in the pipeline. In both cases when the pipeline result is aborted, succeeded, the value of the flag is dropped to 0 when the flow in the pipeline ends.

It is assumed that there are the following three types of the requests requested from the requesting source to the cache control unit. The three types are controlled by the difference as follows.

- LD(Load) request: Generated by an LD miss in the requesting source, the L2 cache control unit performs response of data to the requesting source. The response process of data to the LD request is needed, busy control of the resource (request storing unit 0) is performed.
- STRONG-PF(STRONG-Prefetch) request: a prefetch is generated in the requesting source by software or hardware, the L2 cache control unit does not perform response of data to the requesting source. The response process of data to the STRONG-PF request is needed, busy control of the resource (request storing unit 0) is performed.
- WEAK-PF(WEAK-Prefetch) request: a prefetch is generated in the requesting source by software or hardware, the L2 cache control unit does not perform response of data to the requesting source. The response process of data to the WEAK-PF request is optional, busy control of the resource (request storing unit 0) is not performed.

The LD request is generated by an LD miss in the requesting source. The L2 cache control unit performs response of data to the requesting source. The response process of data to the LD request is necessary. Busy control is performed so as to avoid overflow of the request storing unit 0. As examples of the busy control, there are methods such as to perform a busy notification just before the request storing unit 0 becomes full, to manage the number of resource used with a counter, and the like.

The PF request is generated from a software instruction, or from hardware according to the history of the access address and the like. The STRONG-PF request requires a process to perform response of prefetched data to the requesting source, and it is not to be lost (vanished) without completion of the process. For WEAK-PF request, the request process of data to the STRONG-PF request is optional, and is only executed only in the case in which the hardware resource has room a the time or processing the WEAK-PF request. The prefetch has a function to significantly improve the cache performance, but in some cases, there are some side effects such as that the cache capacity is practically reduced by unnecessary prefetch, the data forwarding band is wasted, and the use of the STRONG-PF request and the use of the WEAK-PF request are distinguished according to the accuracy of the prefetch.

Meanwhile, the WEAK-PF request is excluded from the resource management target of the LD-request, STRONG-PF request. For example, when the request storing unit 0 is occupied with the requests corresponding to the number of the entries without any vacancy but a part of the requests is the WEAK-PF, even if the entry is not released, there is a case in which overwriting is performed according to an LD request or a STRONG-PF request asynchronously with the pipeline.

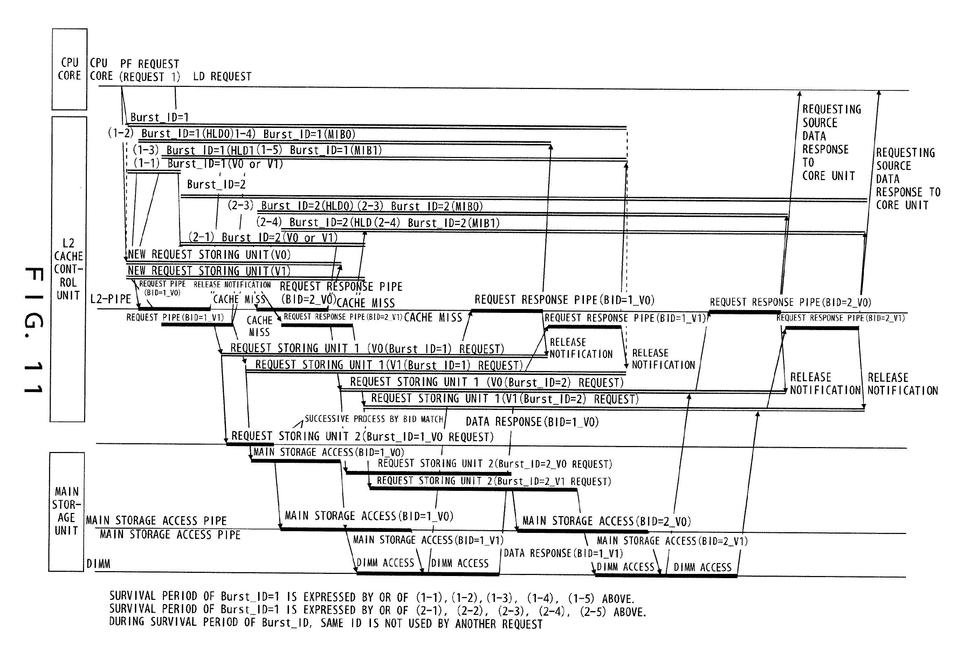

FIG.11 is an operation sequence diagram illustrating BID control in a case in which a WEAK-PF request is overwritten with a subsequent LD request in a request storing unit 0. In this operation example, when a preceding request is stored in the request storing unit 0, overwriting with BID=1, when overwriting with a subsequent request is to be performed there, overwriting with BID=2 is performed. When overwriting with a subsequent request is performed, the request of BID=1 is in a state of flowing in the pipeline, and a cache miss is detected in a pipeline process and a flow for main memory access is continued. Therefore, BID=1 keeps continues to survive until the flow is completed. The HLD0, HLD1 flags represent that the BID=1 in the state of flowing in the pipeline is alive, and in the request storing unit 0, the entry of BID=1 has already become invalid. If there are no HLD0, HLD1, a problem occurs that BID=1 is in an invalid state during that, and is assigned by a new request. In the configuration of FIG. 10, in the respective each BID value usage state judging circuit 704' (BID=0-7), by judging the state of the HLD0, HLD1 flags as well, it becomes possible to avoid the above problem.

The summary of the present embodiment described above is explained below.
To bring of the forwarding performance of the main memory to the maximum, the request size of the memory access request that exceeds the cache line needs to be divided in the cache line size and the execution of the cache pipeline process and the reconstruction and processing of the divided request when outputting it to the main storage apparatus are needed. As a method to assist the reconstruction, at the time of the pipeline processing, an identifying ID is attached to associate the respective divided requests and the respective requests that can be put together are linked. This identification ID is called BID.

Configuration diagrams of the present embodiment are illustrated in FIG.5 through FIG.8. In addition, a time chart at the time of the local CPU memory access in the 1-CPU configuration or in the CC-NUMA configuration is illustrated in FIG.9A. Furthermore, a time chart at the time of the remote CPU memory access in the CC-NUMA configuration is illustrated in FIG.9B.

In the request storing unit 0, it is assumed that up to two associated requests may be held, and VAL0, VAL1 express that the respective requests are valid. Furthermore, the respective requests express addresses corresponding to adjacent 128B line blocks of PA[7]=0,1 with respect to the entry request PA[39:8]. When requesting a 256B data put together, the requesting resource (CPU core) issues a request in a form of turning on both of the entries VAL0, VAL1 of the request storing unit 0. It is desirable that from the entries of the requests VAL0, VAL1 that are both turned on, successive pipe input is performed for bursting as much as possible. In addition, each entry has an HLD flag that represent it is flowing in the pipeline. When the HLD flag is on, pipeline input regarding the entry is stopped to perform control not to occupy the pipeline uselessly with the same request. At the time of pipeline input, the request address PA[39:7], CODE (represents the type of the request), BID are input into the pipe. The BID is stored in the request storing unit 1 as associated information of the request together with PA, CODE and after that, issued with the request PA, CODE to the main storage control unit. In the case of a request access to the local memory, in issuing the request from the request storing unit 1 to the main storage control unit, when requests with a matching BID are detected, the request packets are sent out in a combined format. In the main storage control unit, a burst access is performed while putting together the requests with the matching BID. The request packet does not need to be a newly defined one, and a response performed in a format of two responses to two normal requests that are not combined is sufficient.

Accordingly, in the cache control system centered on the pipeline processing unit, it becomes possible to realize the optimal main storage access size while maintaining the optimal cache line size and without affecting the cache control system.

Meanwhile, in the case of a request access to a remote memory in the CC-NUMA configuration, from the request storing unit 1, the R-request packet is transmitted via the CC-NUMA request bus, but at that time as well, the R-request is sent out to the HOME-CPU (H-CPU) that manages the memory in the combined packet format. The HOME-CPU which received the R-request divides again into the unit of the cache line size then performs the pipeline process of the H-CPU. When the result of the pipeline was a cache miss, they are stored to the request storing unit 1, when requests with a matching BID are detected, similarly to the case of the local memory, issues the request packet to the main storage control unit with the combined format. Upon receiving the response from the main storage, sends the response packet to the requesting source CPU. Upon receiving the response packet, the requesting source CPU performs the response pipe process in the same manner as in the case of the local memory, and the overall flow is completed.

As described above, it becomes possible to obtain the effect of the present embodiment at the time of remote memory access in the CC-NUMA configuration as well.

Regarding the BID assigned in the request storing unit 0, after a cache miss is detected by a request pipeline process and the entry of the request storing unit 0 is released and is stored in the request storing unit 1, the BID need to continue to survive. For this reason, if the entry number of the request storing unit 0 is used as the BID as it is, the access process to the main storage is completed and the entry of the request storing unit becomes unavailable until the release of the BID. Therefore, the BID needs to be managed with an ID table that is separated from the entry of the request storing unit 0.

Therefore, an entry ID -> BID converting circuit is configured as described below.
Each entry in the request storing unit 0 has a Valid indication signal and assigned BID and the like for the number (two in the present embodiment) of pipeline requests in one Burst request. The validity of the entry itself is OR of all the Valid display signals. By the OR of the decode values of BID held by valid entries, the BID table value assigned to the entry may be obtained. One of the advantages of this method is that the BID table control unit does not need to have a special flag register and the like, and control without inconsistency between the entry ID-BID is assured.

When any of the request groups detects a cache miss in the pipeline process, the request is stored in the request storing unit 1, and a read request is issued to the main storage, and also the request storing unit 0 is opened. In order to let the BID continue to be valid, an MIB flag for indicating that it is being stored in the request storing unit 1 (=a fetch request to the main storage is in progress) is turned on. By having the number of BID × the number of groups (explained as 8X2 in the present embodiment but it may be 32 × 2 and the like) of MIB flags, the continued validity of the BID (new assignment is not allowed) as the request to the main storage is in progress is indicated.

The valid BID is expressed by OR of the output of the entry ID -> BID converting circuit of the request storing unit 0 and the MIB flag.

In the case in which a new request is issued from the requesting source (CPU core), the BID to be assigned to the new request is selected from invalid (available) BIDs, and is set in the entry with the request PA and the like.

As the number of the BIDs, around the total number of the request storing units 0 and the request storing units 1 is sufficient. If it is insufficient for a reason regarding implementation and the like, there is a possible method for example in which BID=0 is regarded as an invalid ID (match detection and burst processing in the main storage apparatus are prohibited) and when any available ID do not exist, the burst processing itself is prohibited.

Meanwhile, a case of a configuration in which the cache is shared by a plurality of requesting sources (CPU cores) and the request storing unit 0 correspond to each request core is considered. In this case, the BID needs to include distinction by the requesting source in the main storage apparatus. Therefore, there is a need to add bits to distinguish the requesting source (2 bits when the number of requesting source cores is 4 for example) in the pipeline input unit and to supply the BID to the main storage control unit.

Furthermore, in the case of the CC-NUMA configuration, since there is a need to distinguish the Burst_ID for each requesting CPU, there is a need to add bits to distinguish the requesting CPU in the same manner.

A configuration diagram of another embodiment is illustrated in FIG.10.
The time chart in FIG.11 illustrates the case including a remote CPU, MID, HLD.
The difference in the configuration is that in the BID table in the request storing unit 0, in addition to the MIB0, MIB1 flags, the HLD0, HLD1 flags are added.

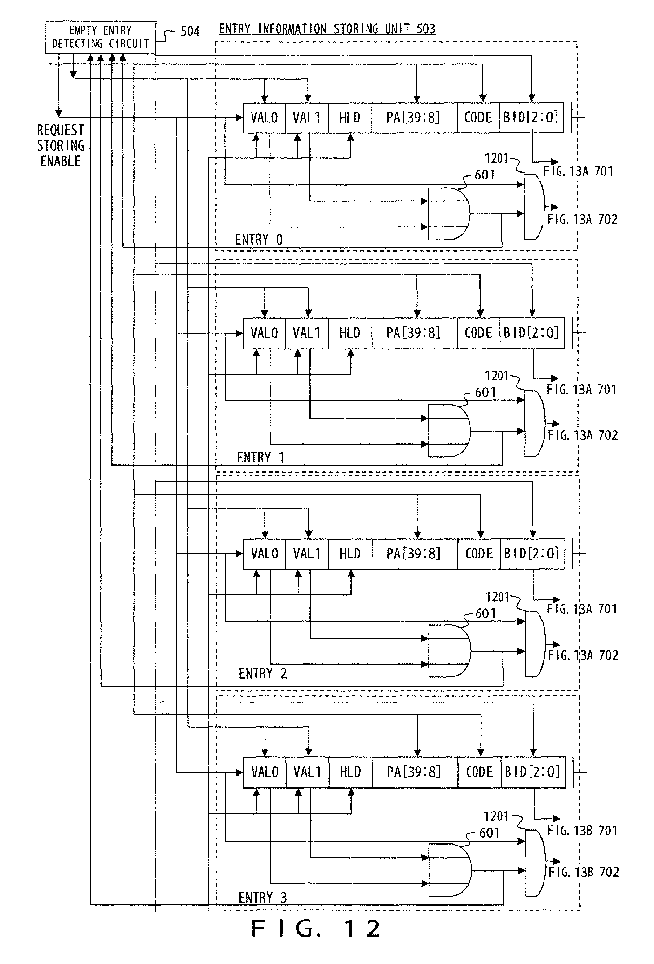

FIG.12 illustrates a more detailed configuration example of the entry information storing unit 503 in the request storing unit in FIG.5. In the same manner as the case in FIG.6, the entries are constituted by four entries from an entry 0 to an entry 3. Each entry store six pieces of information VAL0, VAL1, HLD, PA, CODE, BID. As described earlier in FIG.6, FIG.7, FIG.10 and the like, validity/invalidity of each entry of the entry information storing unit 503 is judged by the inter-entry priority selecting circuit 505 and the BID entry converting circuit 506. Then, the validity/invalidity is obtained for each entry in the entry information storing unit 503 by an OR gate obtaining OR of the flag data of the VAL0 and VAL1. At this time, in the circuit configuration example in FIG. 12, an AND gate 1201 provided for each entry further obtains AND of the output of the OR gate 601 and a request storage enable signal output from the empty entry detecting circuit 504 in FIG.5 and outputs it as valid/invalidity information. Accordingly, it becomes possible to perform a more accurate validity/invalidity judgment.

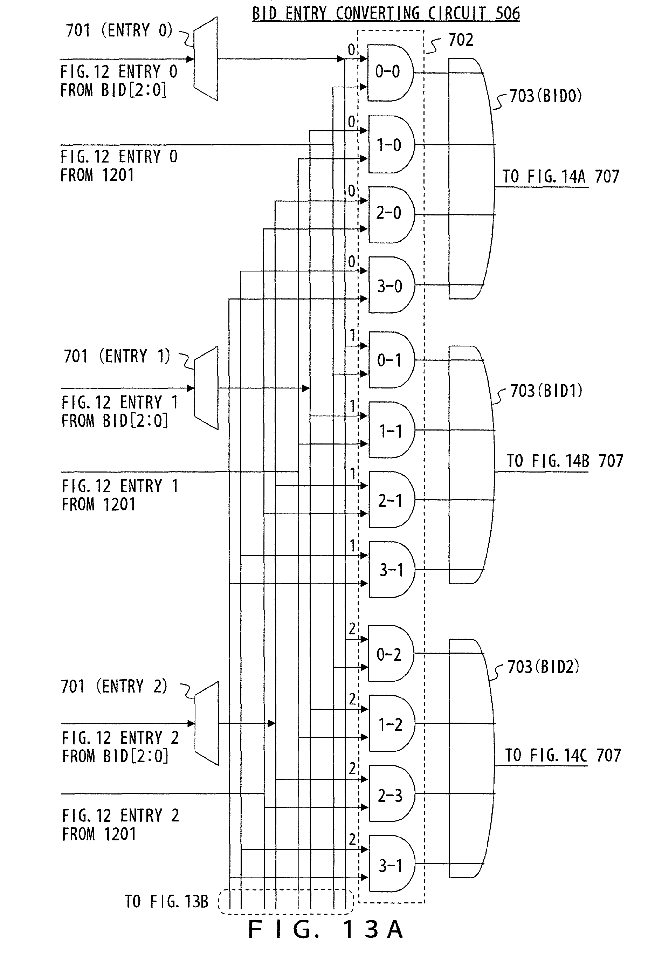

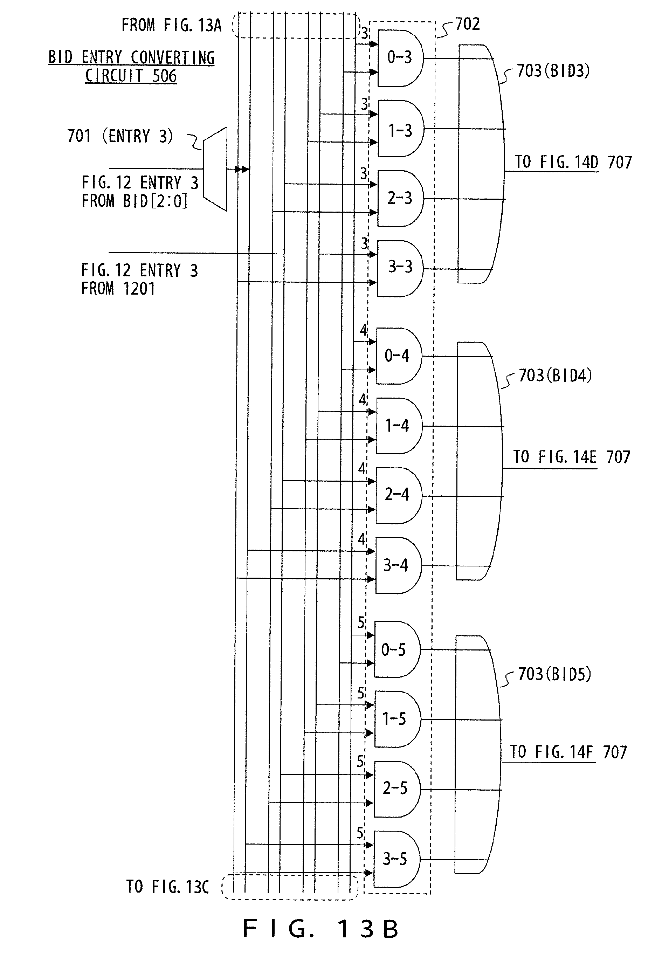

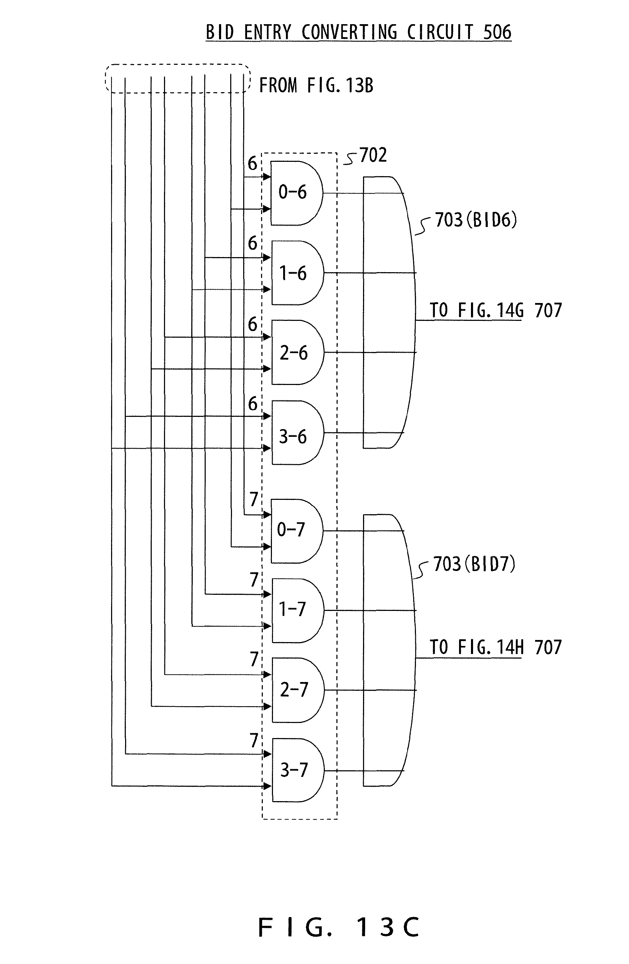

FIG.13A, FIG.13B, FIG.13C illustrates a specific circuit configuration example of the BID entry converting circuit 506 illustrated in FIG.7. In FIG.13A, FIG.13B, FIG.13C, the same number is assigned to the circuit element having the same function as in the case of FIG.7. In addition, numbers connected by a hyphen described in each circuit symbol in an AND gate group 702 illustrated in FIG.13A, FIG.13B, FIG.13C represent "entry number-BID". For example, the AND gate 702 with the description of "0-0" on the top turns on with number 0 entry and when BID=0 for example. Meanwhile, the next AND gate 702 with the description of "1-0" turns on with number 1 entry and when BID=0.

Now, for example, in the case in which a valid memory access request is held in the entry 0 in FIG.12, the operation is performed as follows. The output of the AND gate 1201 of the entry 0 in FIG.12 makes the AND gates 702(0-0), 702(0-1), 702(0-2) in FIG.13A enter a state in which they may be turned on. At the same time, the AND gates 702 (0-3), 702 (0-4), 702 (0-5) in FIG.13B are made to enter a state in which they may be turned on. At the same time, the AND gates 702 (0-6) and 702 (0-7) are made to enter a state in which they may be turned on. Then, the decoder 701 (entry 0) in FIG.13B turns on one of the eight AND gates 702 (0-x) (x=0-7), according to the 3-bit value of the BID of the entry in FIG.12. As a result, one of the outputs of 703(BID0), 703(BID1), 703(BID2), in FIG.13A, 703(BID3), 703(BID4), 703(BID5) in FIG.13B, 703(BID6), 703(BID7) in FIG.13C turns on. This output turns on the OR gate in the each BID value usage state judging circuit 704 in FIG.7 or the each BID value usage state judging circuit 704' in FIG.10 corresponding to the corresponding BID.

In the case in which a valid memory access request is held in the entry 1 in FIG.12, the operation is performed as follows. The output of the AND gate 1201 of the entry 1 in FIG.12 makes the AND gates 702(1-0), 702(1-1), 702(1-2) in FIG.13A enter a state in which they may be turned on. At the same time, the AND gates 702(1-3), 702(1-4), 702 (1-5) in FIG.13B are made to enter a state in which they may be turned on. At the same time, the AND gates 702 (1-6) and 702 (1-7) are made to enter a state in which they may be turned on. Then, the decoder 701 (entry 1) in FIG.13B turns on one of the eight AND gates 702(1-x) (x=0-7), according to the 3-bit value of the BID of the entry in FIG.12. As a result, one of the outputs of 703 (BID0), 703(BID1), 703(BID2) in FIG.13A, 703(BID3), 703(BID4), 703(BID5) in FIG.13B, 703(BID6), 703(BID7) in FIG.13C turns on. This output turns on the OR gate in the each BID value usage state judging circuit 704 in FIG.7 or the each BID value usage state judging circuit 704' in FIG.10 corresponding to the corresponding BID.

In the case in which a valid memory access request is held in the entry 2 in FIG.12, the operation is performed as follows. The output of the AND gate 1201 of the entry 2 in FIG.12 makes the AND gates 702(2-0), 702(2-1), 702 (2-2) in FIG.13A enter a state in which they may be turned on. At the same time, the AND gates 702(2-3), 702(2-4), 702 (2-5) in FIG.13B are made to enter a state in which they may be turned on. At the same time, the AND gates 702 (2-6) and 702 (2-7) are made to enter a state in which they may be turned on. Then, the decoder 701 (entry 2) in FIG.13B turns on one of the eight AND gates 702(2-x) (x=0-7), according to the 3-bit value of the BID of the entry in FIG. 12. As a result, one of the outputs of 703 (BID0), 703(BID1), 703(BID2) in FIG.13A, 703(BID3), 703(BID4), 703(BID5) in FIG.13B, 703(BID6), 703(BID7) in FIG.13C turns on. This output turns on the OR gate in the each BID value usage state judging circuit 704 in FIG.7 or the each BID value usage state judging circuit 704' in FIG.10 corresponding to the corresponding BID.

In the case in which a valid memory access request is held in the entry 3 in FIG.12, the operation is performed as follows. The output of the AND gate 1201 of the entry 1 in FIG.12 makes the AND gates 702(3-0), 702(3-1), 702(3-2) in FIG.13A enter a state in which they may be turned on. At the same time, the AND gates 702(3-3), 702(3-4), 702(3-5) in FIG.13B are made to enter a state in which they may be turned on. At the same time, the AND gates 702(3-6) and 702(3-7) are made to enter a state in which they may be turned on. Then, the decoder 701 (entry 3) in FIG.13B turns on one of the eight AND gates 702702(3-x) (x=0-7), according to the 3-bit value of the BID of the entry in FIG.12. As a result, one of the outputs of 703(BID0), 703(BID1), 703(BID2) in FIG.13A, 703(BID3), 703(BID4), 703(BID5) in FIG.13B, 703(BID6), 703(BID7) in FIG.13C turns on. This output turns on the OR gate in the each BID value usage state judging circuit 704 in FIG.7 or the each BID value usage state judging circuit 704' in FIG.10 corresponding to the corresponding BID.

By the circuit configuration illustrated in FIG.13A, FIG.13B, FIG.13C above, in the case in which one of the BID0 through BID7 is validly stored in one of the entries of the entry information storing unit 503 in FIG.5 and FIG.12, the operation is performed as follows. In the BID usage status judging circuit 507 in FIG. 7, among the OR gates 707 in the each BID value usage state judging circuit 704' corresponding to the BID0 to the BID7, the one corresponding to the BID value stored in one of the entries of the entry information storing unit 503 is turned on. Accordingly, notification of the BID being used in the entry information storing unit 503 may be sent to the available ID detecting circuit 508 in FIG.5 and FIG.7, and the available ID detecting circuit 508 is able to detect the BID in the available state based on it.

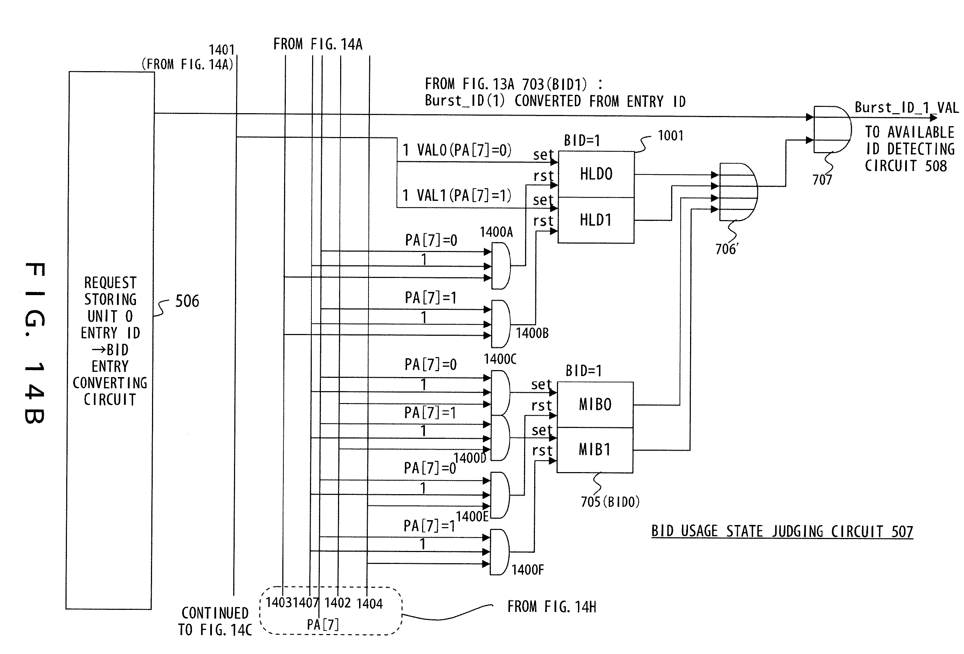

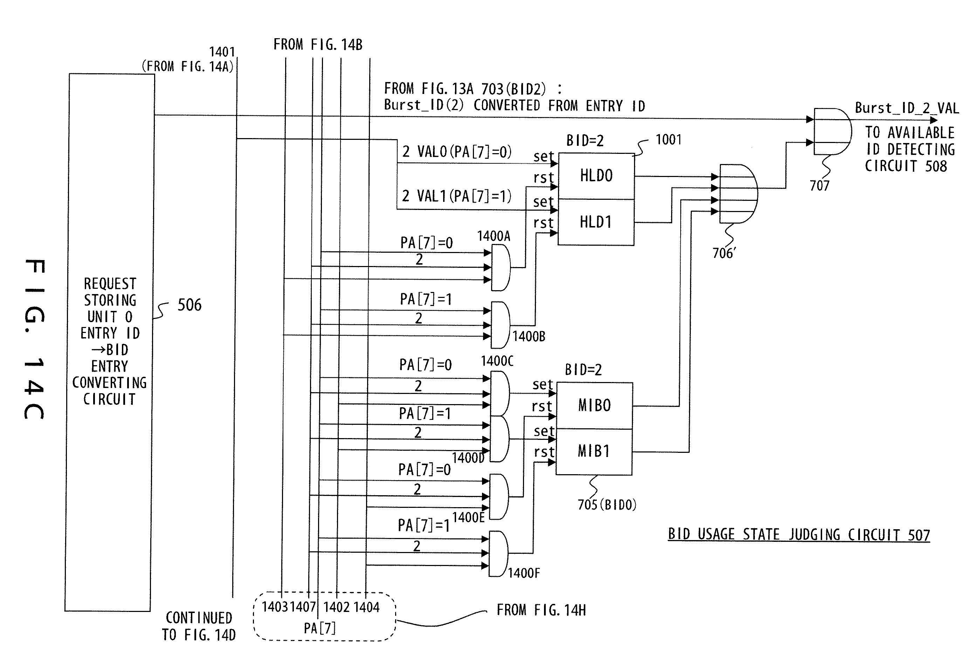

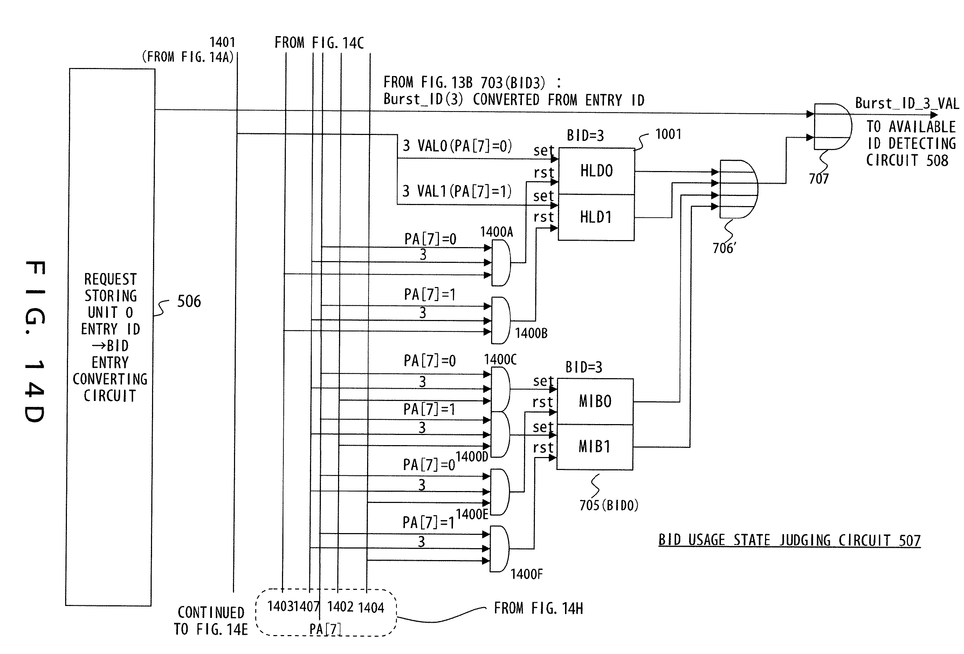

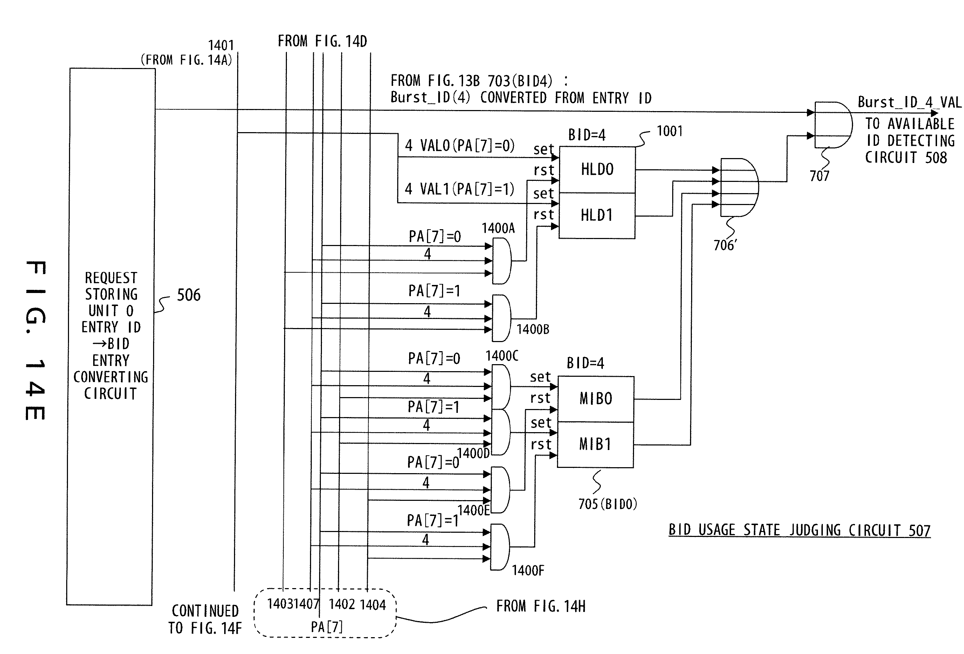

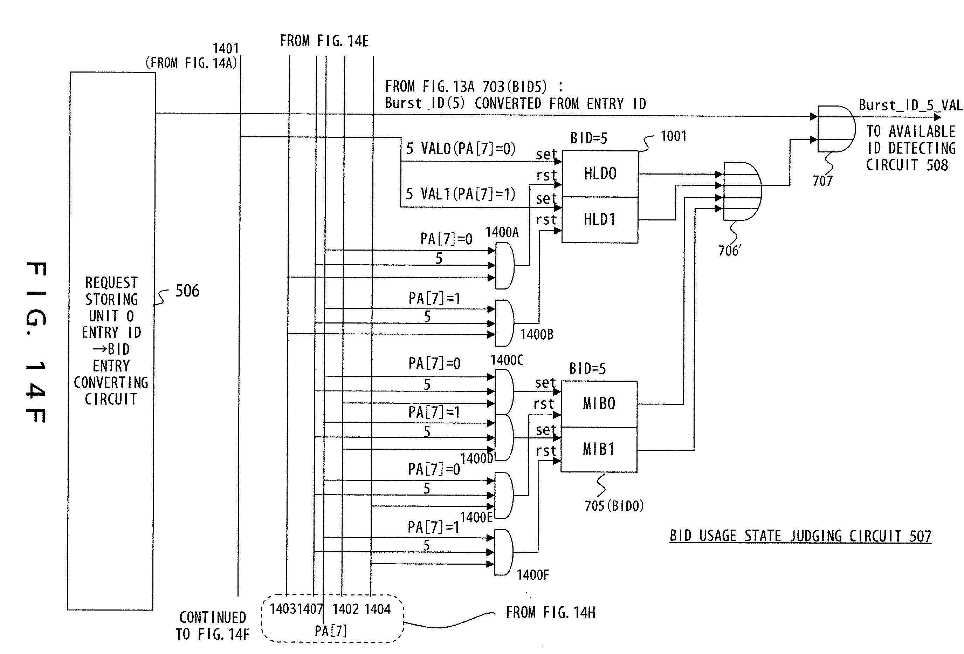

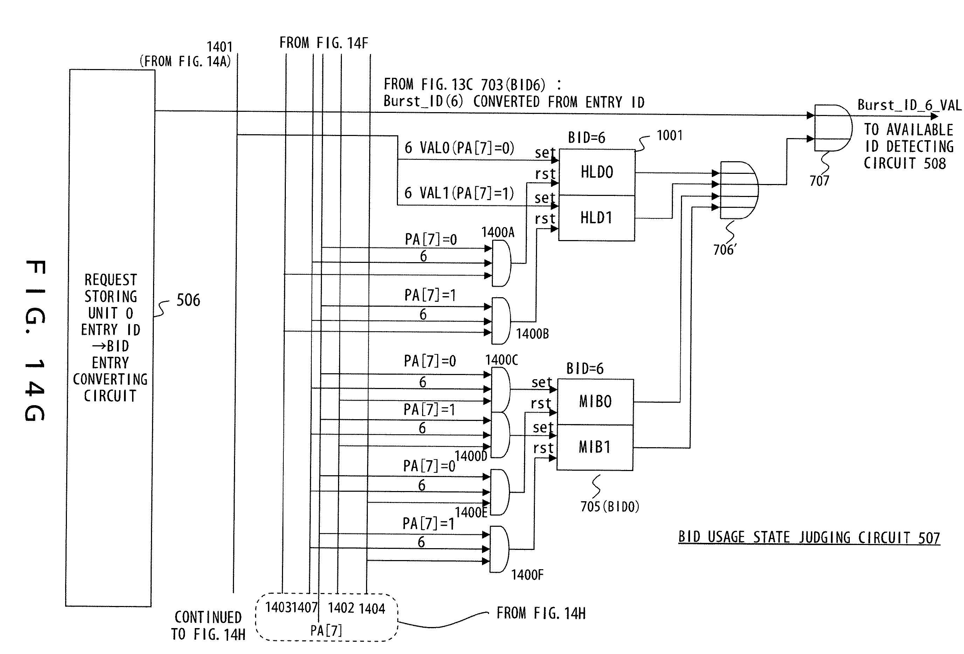

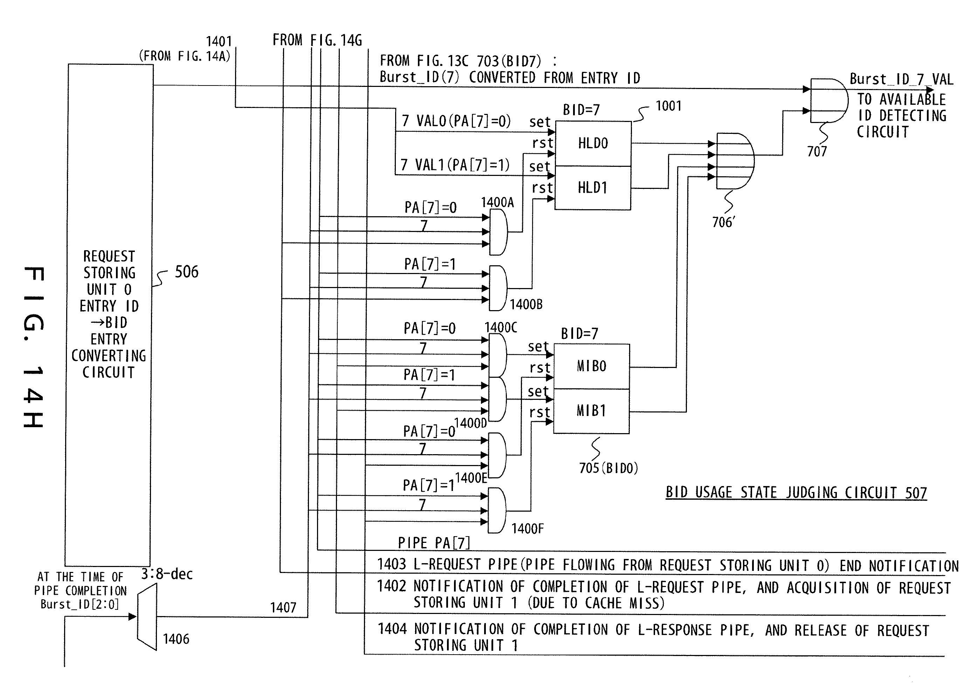

FIG.14A, FIG.14B, FIG.14C, FIG.14D, FIG.14E, FIG.14F, FIG.14G and FIG.14H is more detailed circuit configuration diagrams of the BID usage status judging circuit 507 in FIG.10. They respectively illustrate circuit configuration diagrams of the each BID value usage state judging circuits 704' corresponding to BID=0, 1, 2, 3, 4, 5, 6, and 7.

In FIG.14A-FIG.14H, a register group 1001 (BID0) holding HLD0 and HL1 is explained.

In the register group 1001, the HLD side of BID=i is set at the input timing of the entry of VAL0=1(PA[7]=0) into the pipeline control unit 103. Meanwhile, i is 0 in FIG.14A, 1 in FIG.14B, 2 in FIG.14C, 3 in FIG.14D, 4 in FIG.14E, 5 in FIG.14F, 6 in FIG. 14G, 7 in FIG.14H. Hereinafter, the same applies when i is mentioned. An input timing signal 1401 of the memory access of BID=i, VAL0=1(PA[7]=0) may be obtained from the inter-entry priority selecting circuit 505 in FIG.5. Meanwhile, the HLD0 side of BID=i is reset by the output of an AND gate 1400A when the BID decode value 1407 at the time of pipeline=i and the release notification of the request storing unit 0 is on. PA[7] of the pipe address may be identified from the pipe address output from the pipeline control unit 103. The BID decode value at the time of pipeline end 1407 is decoded by a decoder 1406 in FIG.14H based on the 3-bit BID output of the pipeline control unit 103. The release notification of the request storing unit 0 is output from the pipeline control unit 103. For example, at the end timing of (1-2) in FIG.11.

In the register group 1001, the HLD1 side of BID=i is set at the input timing of the entry of BID=i, VAL1=1(PA[7]=1) into the pipeline control unit 103. The input timing of the memory access request of BID=i, VAL1=1(PA[7]=1) may be obtained from the inter-entry priority selecting circuit 505 in FIG.5. Meanwhile, the HLD1 side of BID=i is reset by the output of an AND gate 1400B when the BID decode value 1407 at the time of pipeline=i and the release notification of the request storing unit 0 is on. For example, at the end timing of (1-3) in FIG.11.

A register group 705 holding MIB0 and MIB1 flats are explained.

In the register group 705, the MIB0 side of BID=i is set by an AND gate 1400C when PA[7] (7th bit) of the pipe address=0, the BID decode value 1407 at the time of pipeline=i and a request storing unit 1 entry acquisition notification 14 is on. The request storing unit 1 entry acquisition notification 14 is output by the pipeline control unit 103 in FIG.5. As described above, the MIB0 is set at the timing when a memory access request having the corresponding BID meets a cache miss and the entry of the request storing unit 1 storing the memory access request is acquired. For example at the start timing of (1-4) in FIG.11. Meanwhile, the MIB0 side of BID=i is reset by an AND gate 1400E when the BID decode value 1407 at the time of pipeline=i and the release notification of the request storing unit 1 is on. For example at the end timing of (1-4) in FIG.11.

In the register group 705, the MIB1 side of BID=i is set by an AND gate 1400D when PA[7] (7th bit) of the pipe address=1, the BID decode value 1407 at the time of pipeline=i and a request storing unit 1 entry acquisition notification 14 is on. As described above, the MIB1 is set at the timing when a memory access request having the corresponding BID meets a cache miss and the entry of the request storing unit 1 storing the memory access request is acquired. For example at the start timing of (1-5) in FIG. 11. Meanwhile, the MIB1 side of BID=i is reset by an AND gate 1400F when PA[7] (7th bit)of the pipe address=1, the BID decode value 1407 at the time of pipeline=i and the release notification of the request storing unit 1 is on. For example at the end timing of (1-5) in FIG.11.

As describe above, the MIB0 and MIB1 are on while the memory access request of the corresponding BID stays in the request storing unit 1.

As described above, not only the register group 705 holding the MIB0 and MIB1 but also the register group 1001 holding two flags HLD0 and HLLD1 is referred to, OR is obtained at the OR gate 706' , and the usage state of each entry is judged.

As described above, in the present embodiment, it becomes possible to search for the BID in the available state while avoiding the BID of the memory access request in the used state in the pipeline process.

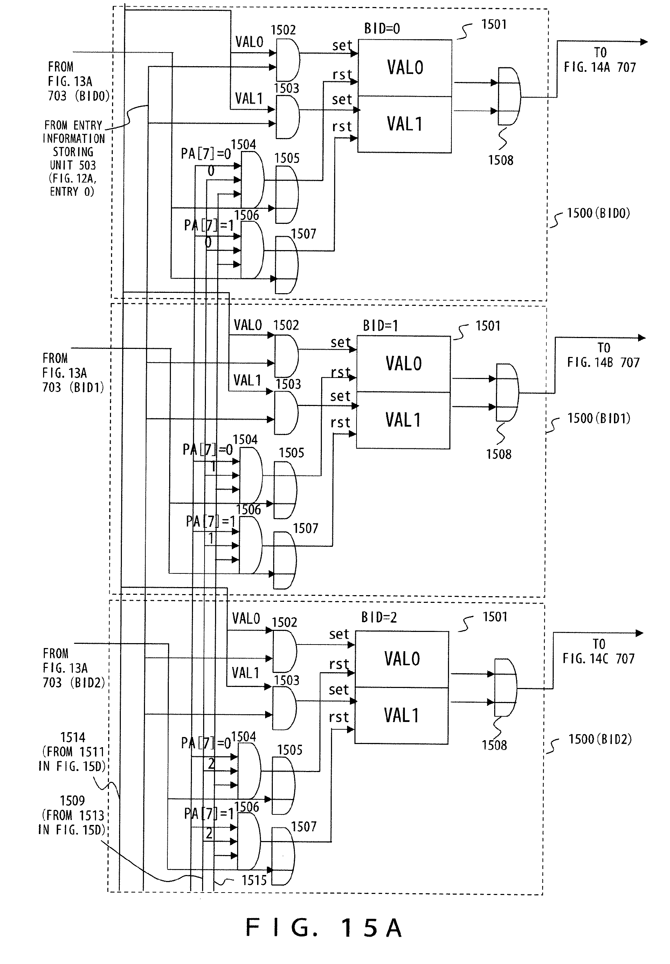

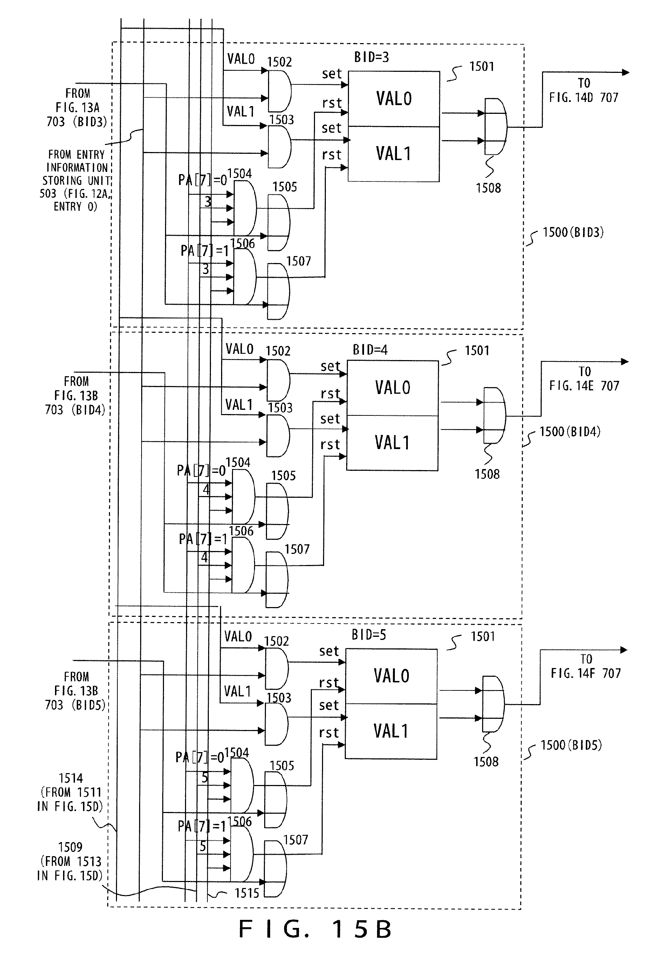

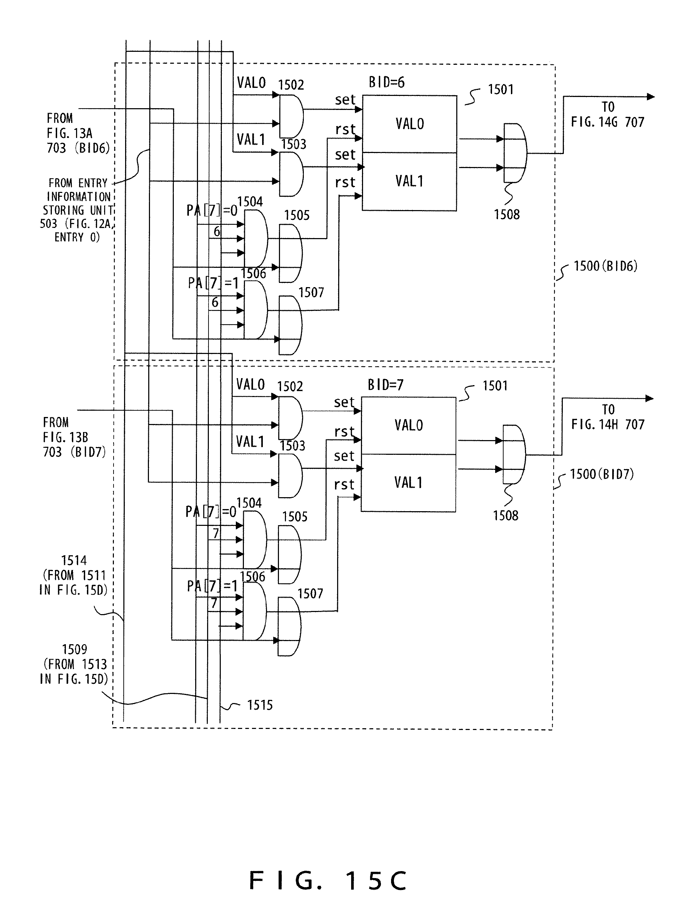

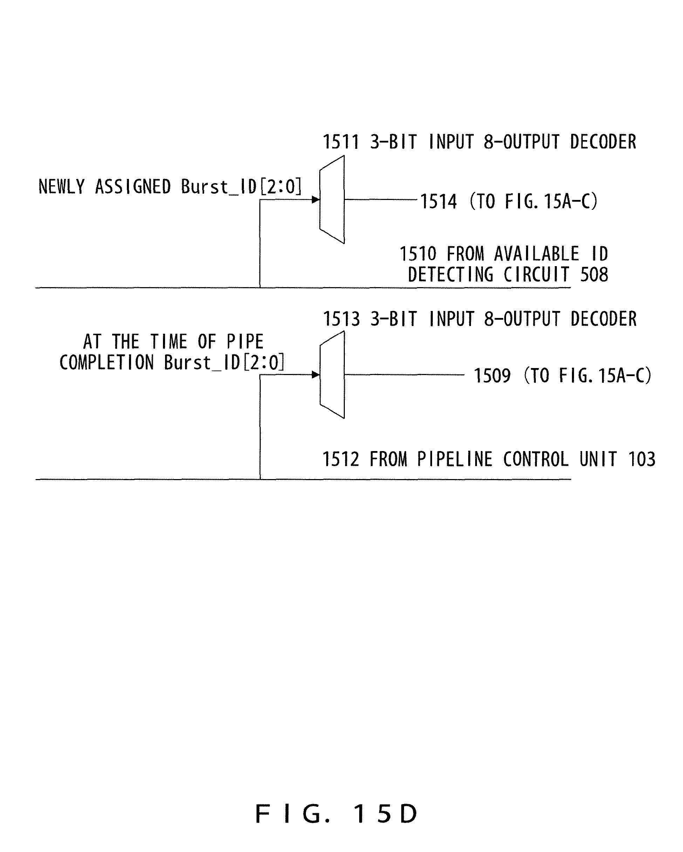

FIG.15A, FIG.15B, FIG.15C and FIG.15D are circuit configuration diagrams illustrating variation examples of a BID assigning circuit constituted by the entry converting circuit 506 and the BID usage status judging circuit 507 in FIG.7 or FIG.10 and diagrams illustrating circuit configuration examples of the BID table circuit. In these drawings, since the circuit block parts constituted by 1500 (BIDO-BID7) is a part that performs processing for each of the BID0-BID7 and has the same configuration, only the circuit configuration of the BID0 is explained.

The respective outputs of the eight OR gates 703 corresponding to the BIDO-BID7 of the BID entry converting circuit 506 illustrated in FIG.7 7 are input to OR gates 1505 and 1507 of the respective circuit blocks 1500 of the BID0-BID7 in FIG.15A, B, C for example. Meanwhile, in the respective circuit blocks 1500 of the BIDO-BID7 in FIG.15A, B, C, the output of an OR gate 1508 that obtains OR of the respective register groups 1501 of the VAL0 and the VAL1 are input to the respective OR gates 707 in the BID usage state judging circuit 507 in FIG.14A-H.

A 3-bit new assign BID output from the available ID detecting circuit 508 in FIG. 5 (illustrated as "new assign Burst ID[2:0]) in FIG. 15D is input to a decoder 1511. Then, the decoder 1511 outputs eight signals in which only one of the outputs turns on with respect to a 3-bit input value. Each of the eight output signals from the decoder 1511 is input to the AND gates 1502, 1503 in the respective circuit blocks 1500 of the BID0-BID7 in FIG. 15A, B, C. In addition, to an AND gate 1502 in the respective circuit blocks 1500 of the BID0-BID7 in FIG.15A, B, C, a VAL0 signal input from the empty entry detecting circuit 504 in FIG.12A to the entry information storing unit 503 is input. In the same way, to an AND gate 1503 in the respective circuit blocks 1500 of the BID0-BID7 in FIG.15A, B, C, a VAL1 signal input from the empty entry detecting circuit 504 in FIG.12A to the entry information storing unit 503 is input. The VAL0 signal corresponds to the request of PA[7]=0, and a VAL1 signal corresponds to the request of PA[7]=1. The VAL0 and VAL1 of the register group 1501 is set when a memory access request is newly stored from the empty entry detecting circuit 504 into an empty entry in the entry information storing unit 503. Specifically, when storing the new request in the entry information storing unit 503, based on an output 1514 of the decoder 1511 in FIG.15D, it becomes possible to turn on the AND gates 1502 and 1503 in the circuit block 1500 corresponding to the newly obtained BID in the available ID detecting circuit 508. Then, the value of the VAL0, VAL1 signals of the memory access request output from the empty entry detecting circuit 504 is set in the register group 1501 of the VAL0 and VAL1 via the AND gates 1502 and 1503 in the circuit block 1500 corresponding to the obtained BID.

Meanwhile, in FIG.15D, the 3-bit BID at the time of pipeline process completion (described as "Burst_ID[2:0] at pipe completion" in the drawing) from the pipeline control unit 103 from FIG.5 is input to a decoder 1513. Then, the decoder 1513 outputs eight signals in which only one of the outputs turns on with respect to a 3-bit input value. Each of the eight output signals from the decoder 1513 is input to AND gates 1504, 1506 in the respective circuit blocks 1500 of the BID0-BID7 in FIG.15A, B, C. Furthermore, it becomes possible to turn on the AND gate 1504 in the respective circuit blocks 1500 of the BID0-BID7 in FIG.15A, B, C when the physical address PA[7] of the memory access request at the time of the pipeline process completion from the pipeline control unit 103 in FIG.5 is 0. Furthermore, it becomes possible to turn on the AND gates 1504, 1506 in the respective circuit blocks 1500 of the BIDO-BID7 in FIG.15A, B, C by a signal 1515 of a release instruction from the pipeline control unit 103 in FIG.5. By the configuration described above, the VAL0 and VAL1 in the register group 1501 are reset via the AND gate 1504 and the OR gate 1505 or the AND gate 1506 and the OR gate 1507 when the request of the corresponding BID completes the request pipe without abort and is released from the request storing unit 0.

Furthermore, one of the AND gate 703 (FIG.13A, FIG.13B) of one of the BIDs in the BID entry converting circuit 506 in FIG.5 turns on, and when usage is detected with the BID, the OR gates 1505 and 1507 in the circuit block 1500 corresponding to the BID turn on. As a result, the VAL0 and VAL1 of the register group 1501 in the circuit block 1500 corresponding to the BID is reset.

When a WEAK-PF existing in the request storing unit 0 is overwritten with another request, the BID before the overwriting needs to be released. Then, as described above, with the output of the BID entry converting circuit 506 being added to the OR gates 1505 and 1507, the VAL0 and VAL1 are reset when the BID is valid at the time of the overwriting. Accordingly, the input to the BID usage status judging circuit 507 connected to the subsequent stage of the circuit block 1500 is turned off, and the BID0 that has been in the used state so far is released.

By the configuration described above, with the securing and release of the BID in the request storing unit 0, the availability information of the BID may be managed. In the present embodiment, it becomes possible to manage the BID at a desired timing such as when the memory access request is secured/released in the request storing unit 0, when it is input/released in the pipeline process in the pipeline control unit 103, when it is stored/released in the request storing unit 1 at the time of a cache miss, and the like.

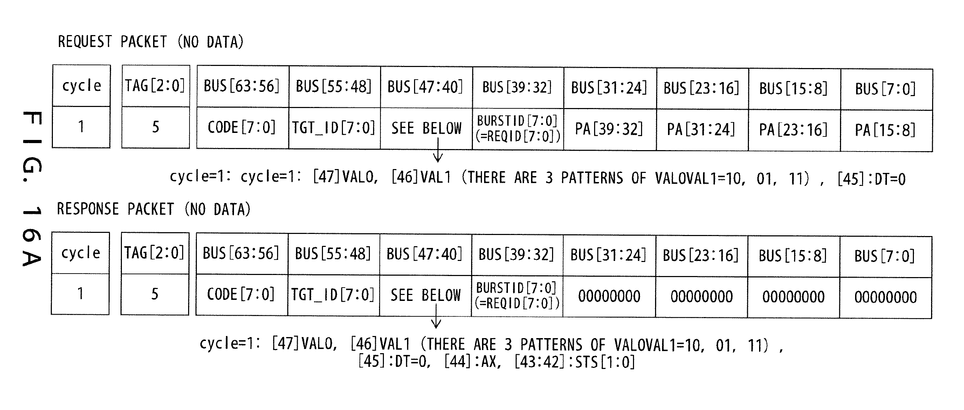

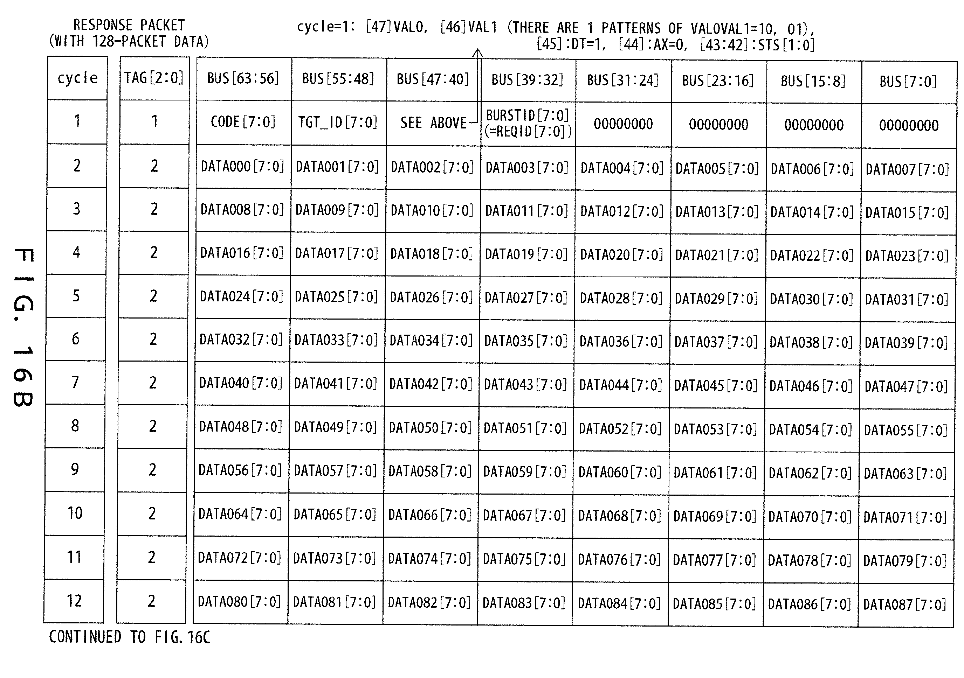

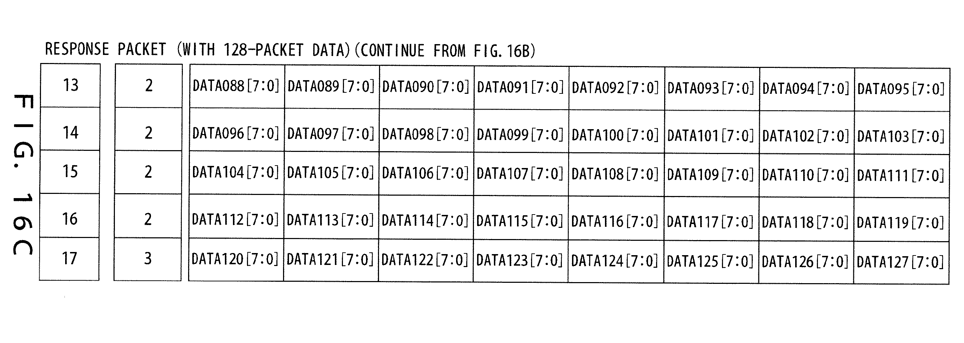

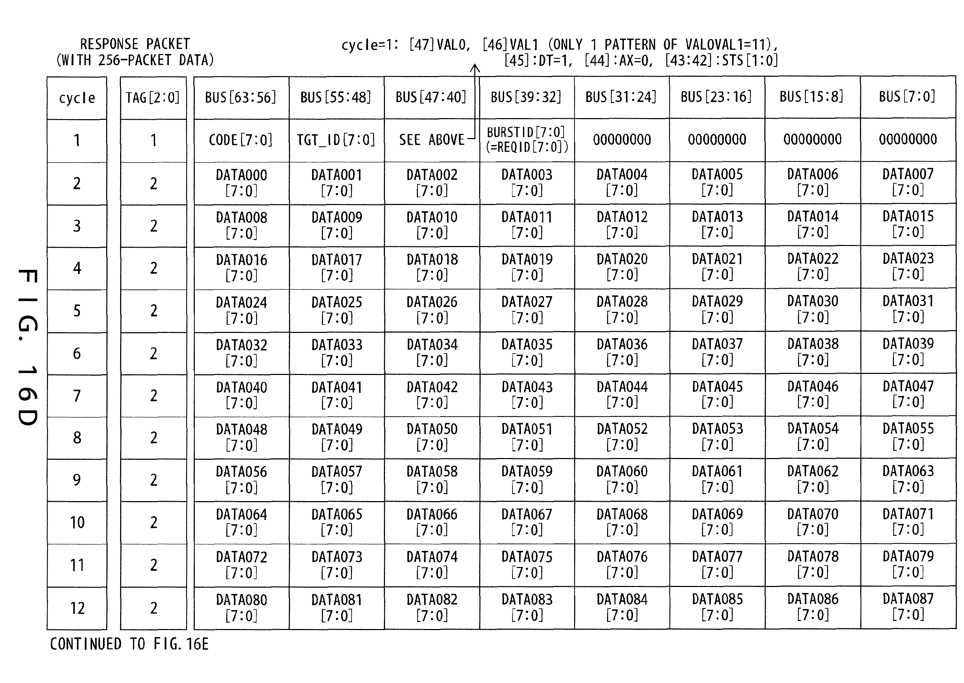

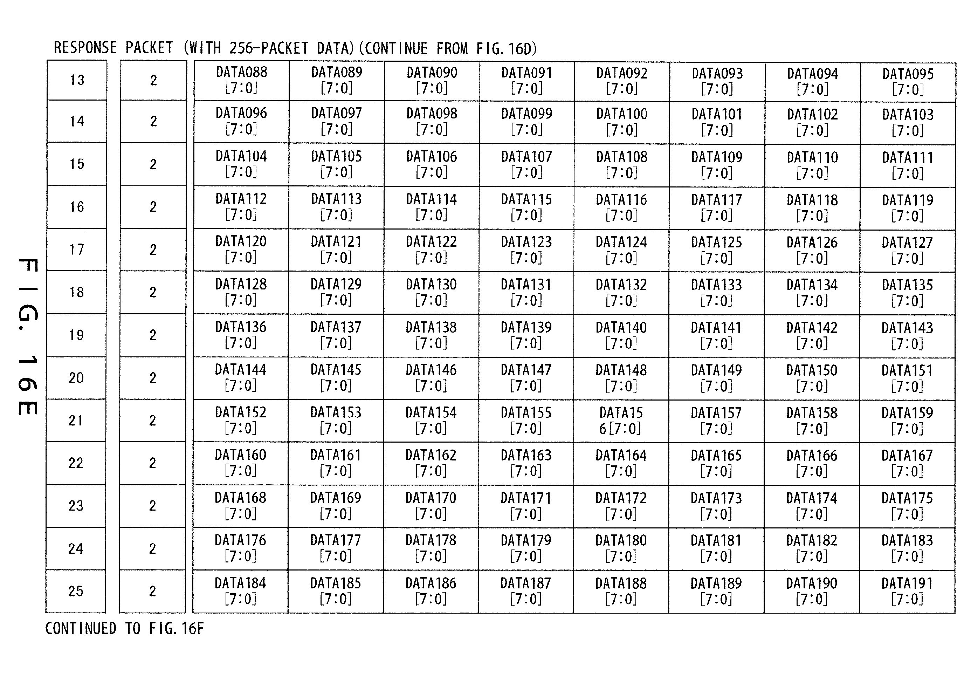

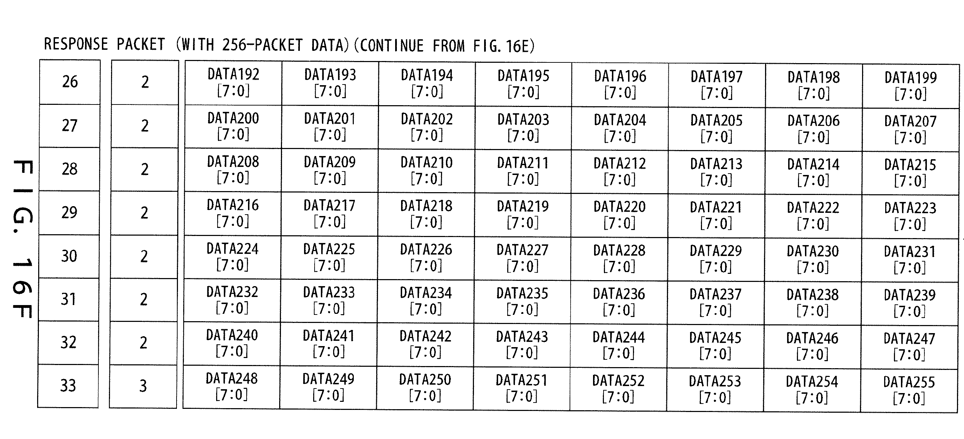

FIG.16A, FIG.16B, FIG.16C, FIG.16D, FIG.16E and FIG.16F are diagrams illustrating examples of a packet format used in the present embodiment. FIG.16A illustrate a format example of a request packet (no data) and a response packet (no data). FIG.16B and FIG.16C illustrate an example of a response packet (with 128-byte data). FIG.16D, FIG.16E, FIG.16F illustrate an example of a response packet (with 256-byte data) .

In these drawing, it is assumed that a packet bus is constituted by a TAG[2:0] representing position information of the packet, and an 8-byte width BUS[63:0].

Cycle is only illustrated in the drawing and is not included in the packet signal. In each drawing, it indicates which cycle of the packet is what information.

The value of TAG is displayed with the following rules, and a standard for packet reception control at the packet recipient is indicated.
TAG=0: The packet is invalid.
TAG=1 : The top of a packet consisting of a plurality of cycles.
TAG=2: Other than the top, the end of a packet consisting of a plurality of cycles.
TAG=3: The end of a packet consisting of a plurality of cycles.
TAG=5: 1-cycle packet.

Hereinafter, the main contents illustrated in the packet format examples FIG.16A-FIG.16F are explained.
CODE[7:0]: Represents what kind of request, or a completion response to a request.

For example, an example of a fetch request and its completion response as follows is presented.
CODE=1 M1-SH(Shared type fetch request to H-CPU)
CODE=2 M1-EX(Exclusive type (storable type) to H-CPU)
CODE=80 MS-FCH(fetch request to the main storage)
CODE=41 M1-SH-CPLT(response to M1-SH, involving data)
CODE=42 M1-EX-CPLT(response to M1-EX, involving data)
CODE-C0 MS-FCH-CPLT(response to MS-FCH, involving)

TGT_ID: Meaningful only for a packet between CPUs, and specifies a destination CPU_ID.
BURST_ID(=REQID) : Specifies BURST_ID. In this case, a function as a request identifying ID (REQID) is also given to BURST_ID. When the BURST_ID is not to be used as the REQ_ID is an example, there is a need to provide it with a separate dedicated REQ-ID field. Since the BURST_ID is controlled so that until its response is performed, its uniqueness is guaranteed, there is no problem in using it as the REQ_ID, and it is rather preferable.

PA[39:8] : Specifies the request PA in the unit of 256 bytes. Which 128 bytes in the 256 bytes, or whether it is both is indicated by the VAL0, VAL1 fields.

VAL0, VAL1: In a request packet, indicate whether which 128-byte block is requested in the 256 bytes indicated by PA[39:8]. In a request packet, indicate which 128-byte block is requested in the block requested by BURST_ID(=REQ_ID).

VAL0VAL1=00: Specification is prohibited.
VAL0VAL1=10: Request (response) PA[7]=0 block.
VAL0VAL1=01: Request (response) PA[7]=1 block.
VAL0VAL1=11: Request (response) both PA[7]=0 and 1 blocks (256 bytes).

Meanwhile responding of a block that has not been specified by a request is prohibited. That is, for the request of VAL0VAL1=10(01), only a response of VAL0VAL1=10(01) is allowed.

To the request of VAL0VAL1=11, a response of VAL0VAL1=11 may be performed once, or a response of VAL0VAL1=10 and a response of VAL0VAL1=01 may also performed separately once each. Upon receiving data response, the processing after that is in the unit of 128 bytes, there is not much need for being put together in the unit of 256 bytes. A form in which VAL0VAL1=10 and VAL0VAL1=01 are successive is sufficient.

DT: Indicates that the packet is with data. The data size is determined by VAL0VAL1.
AX: Indicates that the request is address exception.
STS [1:0] : Represents the cache state of the data block with which response is performed. In the response pipe processing, registers a cache STATE represented by STS[1:0].
STS=00:I(Invalidate)
STS=01:S(SHared)
STS=10:M(Modified)
STS=11:E(EXclusive)
DA T Axx[7:0]: Response data is put on.

Here, the I(Invalidate) state indicates that the data held by the cache line is invalid. The S (Shared) state indicates that data of the same content as the data held by the cache line is held in the cache line of another cache memory is held as well. The M (Modified) state indicates that the data held by the cache line is changed from data held by the corresponding main storage apparatus. The E(Exclusive) state indicates that the data held by the cache line is not held in another cache memory but matches data held by the corresponding main storage apparatus.

In the embodiment (FIG.5) explained above, the main storage control unit 107 has a configuration of a separated chip, but it may be configured while included in one chip in the configuration of FIG.5.

In the present embodiment, from the CPU core unit 100 to the request storing unit 0, memory access requests of the processing unit (256 bytes for example) that is an integral multiplication (twice for example) the processing unit (128 bytes for example) of the cache memory may be stored together in one entry. Then, at the time of input into the pipeline control unit 103, the memory access request stored in the entry may be input while being separated into two requests of the processing unit (128 bytes for example) of the cache memory. At this time, the two separated requests may be associated by the BID. As described above, in the pipeline control unit 103, it becomes possible to execute the cache access in the processing unit of the cache memory. Furthermore, at the time of the occurrence of a cache miss, when a main storage request packet or an R-request packet is sent out from the request storing unit 1, via the request packet generating unit 111' to the main storage control unit 107 in the L-CPU or to the H-CPU, control is performed as follows. The request packet generating unit 111' generates and sends out a main request packet or an R-request packet in which memory access requests with a matching BID in each entry of the request storing unit 1. As a result, in the request storing unit 2 or in the H-CPU that is not particularly illustrated in the main storage control unit 107 of the L-CPU, a memory access request is issued in the processing unit (256 bytes for example) of the DIMM 110 being the main storage apparatus, and it becomes possible to realize an efficient main storage access.

## Claims

1. A processor connected to a main storage apparatus, the processor comprising:
a cache memory(106, 108) including a plurality of cache lines respectively holding data;
a request holding unit (request storing unit 0) configured to associate, with each other, and hold, a plurality of access requests to successive areas of the main storage apparatus;
a control unit (111) configured to successively issue the plurality of associated access requests to the main storage apparatus; and
a processing unit (103) configured to register a plurality of pieces of response data from the main storage apparatus to the plurality of successively issued access requests in successive cache lines of the cache memory.

2. The processor according to claim 1, wherein
the plurality of access requests are associated with each other based on a successive access identifier that identifies access requests issued successively, held in a plurality of entries that the request holding unit comprises.

3. The processor according to claim 2, wherein
the processor further comprises an identifier assigning circuit (506∼508) configured to assign a successive access identifier that is not assigned to any entry, to an entry of the request holding unit that is not holding any access request, based on identifier usage information that indicates whether a successive access identifier has been assigned to an entry, when associating, with each other, and holding, the plurality of access requests in the request holding unit.

4. The processor according to claim 3, wherein
the identifier assigning circuit (506∼508) comprises
a judging circuit(506) configured to generate, for each of the plurality of entries, individual identifier usage information that indicates a successive access identifier is assigned to an entry, for each value that a successive access identifier may take; and
an OR circuit (507) configured to generate the identifier usage information as OR of a plurality of pieces of individual identifier usage information generated by the judging circuit.

5. The processor according to claim 3, wherein
the identifier assigning circuit (506∼508)
holds first issue state information (HLD0, HLD1) that indicates, for each value that a successive access identifier may take, that an access request having the value is searching the cache memory; and
assigns a successive access identifier held in the entry while referring to the first issue state information.

6. The processor according to claim 3, wherein
the identifier assigning circuit (506∼508)
holds second issue state information (MIBO, MIB1) that indicates, for each value that a successive access identifier may take, that an access request having the value is being issued to the main storage apparatus; and
assigns a successive access identifier held in the entry while referring to the second issue state information.

7. The processor according to one of claims 1 through 6, wherein
the control unit (111) generates a combined access requests in which the plurality of associated access requests are combined, and issues the combined access request to the main storage apparatus based on address information of the plurality of access requests.

8. An information processing apparatus comprising:
a main storage apparatus; and
a processor connected to the main storage apparatus, the processor including:
a cache memory(106, 108) comprising a plurality of cache lines respectively holding data,
a request holding unit (request storing unit 0) configured to associate, with each other, and hold, a plurality of access requests to successive areas of the main storage apparatus,
a control unit (111) configured to successively issue the plurality of associated access requests to the main storage apparatus, and
a processing unit (103) configured to register a plurality of pieces of response data from the main storage apparatus to the plurality of successively issued access requests in successive cache lines of the cache memory.

9. The information processing apparatus according to claim 8, wherein
the plurality of access requests are associated with each other based on a successive access identifier held in the request holding unit.

10. A control method of a processor that is connected to a main storage apparatus and comprises a plurality of cache lines that respectively hold data comprising:
associating, with each other, and holding, a plurality of access requests to successive areas of the main storage apparatus, in a request holding unit (request storing unit 0) that the processor comprised, using a control unit(111) that the processor comprised;
successively issuing the plurality of associated access requests to the main storage apparatus using the control unit(111);
registering a plurality of pieces of response data from the main storage apparatus to the plurality of successively issued access requests, in successive cache lines of the cache memory, using a processing unit(103) that the processor comprised.

11. The data processing method according to claim 10, wherein
in the control method of the processor,
the plurality of access requests are associated with each other based on a successive access identifier held in the request holding unit(0).
